(19) Europäisches Patentamt
European Patent Office
Office européen des brevets

(11) Numéro de publication: **0 296 994 B1**

(12) **FASCICULE DE BREVET EUROPEEN**

(45) Date de publication de fascicule du brevet: **07.07.93**

(51) Int. Cl.5: **C08F 222/40**, C08F 220/30, C08G 73/12

(21) Numéro de dépôt: **88420203.7**

(22) Date de dépôt: **15.06.88**

(54) **Polymères à groupements imides sans diamine et leur procédé de préparation.**

(30) Priorité: **23.06.87 FR 8709000**
**02.12.87 FR 8717014**

(43) Date de publication de la demande:
**28.12.88 Bulletin 88/52**

(45) Mention de la délivrance du brevet:
**07.07.93 Bulletin 93/27**

(84) Etats contractants désignés:
**AT BE CH DE ES FR GB IT LI LU NL SE**

(56) Documents cités:
**EP-A- 0 167 304**
**EP-A- 0 182 919**

(73) Titulaire: **CIBA-GEIGY AG**
**Klybeckstrasse 141**
**CH-4002 Basel(CH)**

(72) Inventeur: **Arpin, René**
**29, rue du Commandant-Faurax**
**I-69006 Lyon(FR)**

EP 0 296 994 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.6/3.3.1)

## Description

La présente invention a pour objets de polymères thermostables dont l'obtention met en jeu des bis-imides. Elle concerne également des procédés de préparation de ces polymères.

On a déjà décrit des polymères obtenus par réaction entre un N,N'-bis-imide d'acide dicarboxylique insaturé tel que par exemple un N,N'-bis-maléimide avec une diamine biprimaire (brevet français n° 1 555 564). Les quantités de N,N'-bis-imide et de diamine sont choisies de façon que le rapport :

$$\frac{\text{nombre de moles de bis-imide}}{\text{nombre de moles de diamine}}$$

soit au moins égal à 1 ; par ailleurs on préfère généralement qu'il soit inférieur à 50. On obtient des résines thermostables qui résistent remarquablement aux contraintes thermiques sévères.

Il est généralement indiqué dans le brevet français précité que la préparation de ces résines peut être effectuée en masse en chauffant les réactifs préalablement soumis à un mélange intime ou bien au sein d'un diluant polaire inerte tel que le diméthylformamide, la N-méthylpyrrolidone, le diméthylacétamide, ce dernier processus pouvant être utilisé par exemple lorsque la mise en oeuvre du polymère nécessite l'emploi d'une solution.

Finalement, il est mentionné que, pour de nombreux emplois, il est avantageux d'opérer en deux temps ; dans un premier stade, on prépare un prépolymère par chauffage du mélange intime des deux réactifs à une température de l'ordre de 100 à 250° C. Le prépolymère obtenu peut être utilisé à l'état de solution, de suspension, de poudre ou bien être conformé encore par simple coulée à chaud. Dans un second stade, on peut provoquer un drucissement du prépolymère par chauffage jusqu'à des températures de l'ordre de 300° C, éventuellement sous pression.

Ces polymères peuvent être convertis en films ou en matériaux multicellulaires. Ils sont d'un intérêt tout particulier pour la préparation soit d'objets moulés éventuellement en association avec des charges fibreuses ou pulvérulentes, soit de stratifiés à base de fibres minérales (fibres simples, tissu ou non-tissé de fibres) telles que par exemple des fibres de carbone, de bore ou de verre. Cependant la préparation et la mise en oeuvre de ces polymères nécessitent de prendre des précautions sur le plan de l'hygiène lorsque la diamine biprimaire utilisée est de nature aromatique du fait de la toxicité que peuvent présenter certaines d'entre elles.

Pour pallier à cet inconvénient, la Demanderesse est intéressée dans la mise au point de polymères à groupements imides qui ne font pas appel, pour leur préparation, à des diamines.

On a déjà décrit dans la demande de brevet européen EP-A-0.167.304 des polymères à groupements imides qui peuvent être obtenus sans faire appel, pour leur préparation, à des diamines. De pareils polyimides sont obtenus par exemple à partir :

- d'une association de plusieurs N,N'-bis-maléimides, et
- d'un ester (méth)acrylique consistant dans le produit de réaction de l'acide (méth)acrylique avec une résine époxy comme un éther glycidique de poly(hydroxyphényl)alcane ou d'un polycondensat phénol/formol de type novolaque.

Poursuivant des travaux dans ce domaine de la technique, la Demanderesse a constaté que l'enseignement de la demande de brevet précitée ne permet pas, au départ d'un réactif générateur de groupements imides consistant dans un seul et unique N,N'-bis-maléimide, de réaliser des prépolymères et des polymères homogènes pour lesquels le bis-maléimide et l'ester (méth)acrylique sont engagés dans une réaction commune de copolymérisation. On a encore constaté que les prépolymères qui peuvent être préparés se prêtent mal à la réalisation d'articles intermédiaires préimprégnés (servant à la confection des stratifiés) en utilisant la technique de l'imprégnation avec solvant du fait de la très faible solubilité de ces prépolymères dans les solvants généralement utilisés.

Il a maintenant été trouvé, et c'est ce qui constitue un premier objet de la présente invention, des polymères à groupements imides obtenus à partir d'un seul et unique N,N'-bis-maléimide et d'un ester (méth)acrylique de résine époxy qui sont homogènes et conviennent parfaitement, lorsqu'ils se présentent sous l'aspect de prépolymères, à une mise en oeuvre nécessitant l'emploi d'une solution dans un solvant. Pour arriver à ce résultat, il convient d'ajouter dans le milieu de préparation des polyimides souhaités un réactif supplémentaire consistant dans un composé imidazole.

Plus précisément la présente invention concerne, dans son premier objet, des polymères à groupements imides caractérisé en ce qu'ils comprennent le produit de réaction, à une température allant de 50 °C à 300 ° C, entre :

- (a) un N,N′-bis-maléimide de formule :

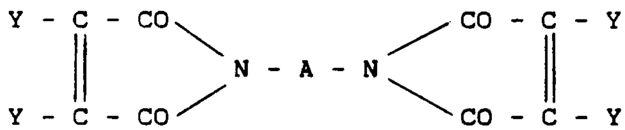

(I)

dans laquelle :

. les symboles Y, identiques ou différents, représentent chacun un atome d'hydrogène, un radical méthyle ou un atome de chlore ;

. le symbole A représente un radical divalent choisi dans le groupe constitué par les radicaux : cyclohexylènes ; phénylènes; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

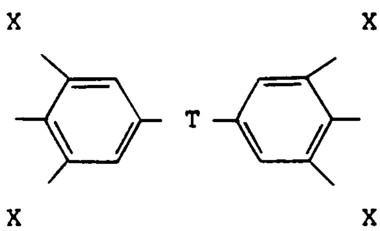

dans laquelle T représente un lien valentiel simple ou un groupement :

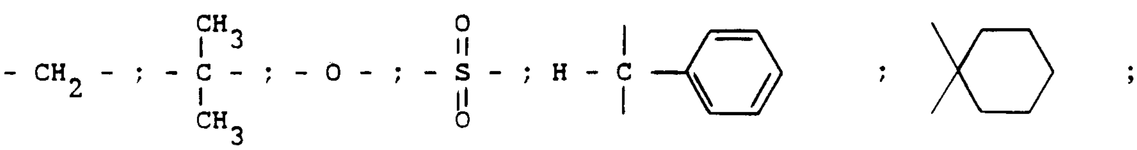

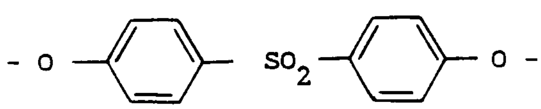

et les symboles X, identiques ou différents, représentent chacun un atome d'hydrogène, un radical méthyle, éthyle, propyle ou isopropyle ;

- (b) un réactif acrylate consistant :

* soit (b1) dans un (méth)acrylate d'époxy novolaque répondant à la formule générale :

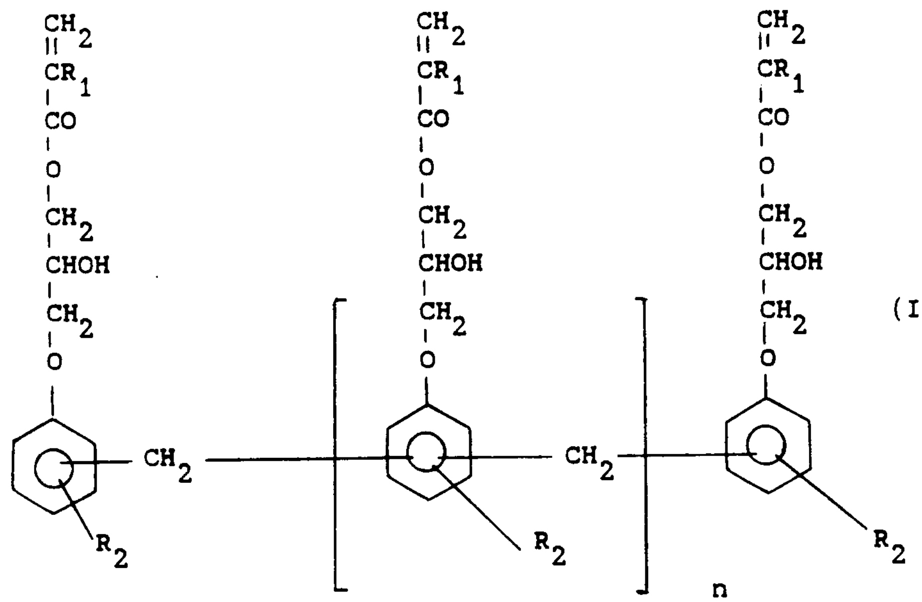

(II)

dans laquelle :

. les symboles $R_1$ et $R_2$, identiques ou différents, représentent chacun un atome d'hydrogène ou un radical méthyle ;

. n est un nombre positif se situant dans l'intervalle allant de 0,1 à 8 ;

* soit dans le mélange du composé (b1) précité avec au plus 30 % en poids, par rapport au poids du mélange (b1) + (b2), d'un composé (b2) de formule générale :

$$(CH_2 = CR_3 - CO - O)_3 B \qquad (III)$$

dans laquelle :

. le symbole $R_3$ représente un atome d'hydrogène ou un radical méthyle;

. le symbole B représente un radical organique trivalent dérivé d'un hydrocarbure aliphatique saturé linéaire ou ramifié ayant de 1 à 20 atomes de carbone et pouvant renfermer un ou plusieurs ponts oxygène et une ou plusieurs fonctions hydroxyles ;

. et (c) un composé imidazole.

D'autres objet et avantage de la présente invention apparaîtront au cours de la description qui va suivre.

A titre d'exemples spécifiques de bis-imides (a) de formule (I) on peut citer en particulier :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N-méthyl-4 phénylène-1,3-bis-maléimide,
- le N,N'-méthyl-5 phénylène-1,3-bis-maléimide.

Ces bis-maléimides peuvent être préparés selon les procédés décrits dans le brevet américain US-A-3 018 290 et le brevet anglais GB-A-1 137 290. On utilise de préférence, pour la mise en oeuvre de la

présente invention, le N,N-4,4′-diphénylméthane-bis-maléimide.

Les (meth)acrylates d'époxy novolaques (b1) de formule (II) sont des produits connus dont certains sont disponibles dans le commerce. Ils peuvent être préparés en faisant réagir l'acide (méth)acrylique avec un résine époxy de type novolaque, cette dernière étant le produit de réaction d'épichlorhydrine et de polycondensats phénol/formol (dans la formule (II) donnée ci-avant $R_2$ est alors un atome d'hydrogène) ou de polycondensats crésol/formol (dans la formule (II) $R_2$ alors un radical méthyle). Ces polyacrylates oligomères (b1) de formule (II) et un procédé pour les préparer se trouvent décrits par exemple dans le brevet américain US-A-3.535.403.

A titre d'exemples spécifiques de composés (b2) de formule (III) qui peuvent être engagés à côté du (méth)acrylate d'époxy novolaque (b1), on peut citer en particulier les esters (méth)acryliques des polyols tels que le tri(méth)acrylate de butanetriol-1,2,4 le tri(méth)acrylate d'hexanetriol-1,2,6, le tri(méth)acrylate de triméthylolpropane, le tri(méth)acrylate de pentaérythritol.

On utilise de préférence, pour la mise en oeuvre de la présente invention, les acrylates d'époxy novolaques (b1) de formule (II) dans lesquelle $R_1$ et $R_2$ représentent un atome d'hydrogène et n est un nombre positif se situant dans l'intervalle allant de 0,1 à 5, ces composés étant pris seuls ou en mélange avec au plus 25 % en poids, par rapport au poids du mélange (b1) + (b2), d'un composé (b2) consistant dans le triacrylate de triméthylolpropane.

Les quantités de N,N′-bis-imide (a) et de réactif acrylate (b) sont choisies de façon à ce que le rapport r :

$$\frac{\text{nombre de groupement maléimides apportés par le bis-imide (a)}}{\text{nombre de doubles liaisons acryliques apportées par le réactif (b)}}$$

se situe dans l'intervalle allant de 1,7/1 à 10/1 et, de préférence, allant de 2/1 à 8/1. Il doit être bien entendu que l'expression "doubles liaisons acryliques apportés par le réactif (b)" désigne l'ensemble des groupements $CH_2 = CR_1$ apportés par le composé (b1) plus éventuellement l'ensemble des groupements $CH_2 = CR_3$ apportés par le composé (b2).

Le composé imidazole (c) répond à la formule générale :

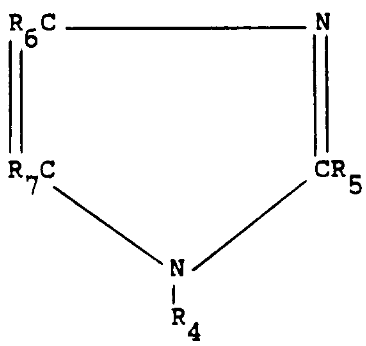

(IV)

dans laquelle $R_4$, $R_5$, $R_6$ et $R_7$ identique ou différents, représentent chacun : un atome d'hydrogène, un radical alkyle ou alcoxy ayant de 1 à 20 atomes de carbone, vinyle, phényle, nitro, $R_6$ pouvant former avec $R_7$ et les atomes de carbone auxquels sont liés ces radicaux un cycle unique comme par exemple benzénique.

Comme exemples spécifiques de composés imidazole, on peut citer en particulier : l'imidazole ou glyoxaline, le méthyl-1 imidazole, le méthyl-2 imidazole, le diméthyl-1,2 imidazole, le vinyl-1 imidazole, le vinyl-1 méthyl-2 imidazole, le benzimidazole.

Le composé imidazole est utilisé en quantités catalytiques. Selon la nature du composé imidazole et selon la vitesse de polymérisation souhaitée au stade de la mise en oeuvre, on utilise le composé imidazole à un taux, exprimé en nombre de moles de composé (c) pour 100 g du bis-imide (a), se situant dans l'intervalle allant de $0{,}15.10^{-3}$ à $6.10^{-3}$ et, de préférence, allant de $0{,}3.10^{-3}$ à $4.10^{-3}$.

Il a encore été trouvé, et c'est ce qui constitue un autre objet de la présente invention, que l'on peut apporter des propriétés particulières aux polymères définis ci-avant par l'ajout supplémentaire, dans leur milieu de préparation, d'une résine époxy chlorée ou bromée, cette dernière étant prise seule ou en mélange avec une résine époxy non chlorée ou non bromée ; cette mesure, de nature facultative, permet d'obtenir une excellente résistance à la combustion pour les polymères qui sont préparés ainsi.

Plus précisément, la présente invention concerne, dans un second objet, des polymères à groupements imides pour lesquels le milieu de réaction qui sert à les préparer contient en outre, à côté des réactifs (a), (b) et (c), une résine époxy (d) consistant soit dans une résine époxy chlorée ou bromée (d1), soit dans le mélange de la résine (d1) avec une résine époxy non chlorée ou non bromée (d2).

Par résine époxy chlorée ou bromée (d1), on entend définir une résine époxy qui possède un poids d'équivalent époxy compris entre 100 et 500 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis-(hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes ; le résorcinol ; l'hydroquinone ; le pyrocatéchol ; le dihydroxy-4,4′ diphényl ; et les produits de condensation des phénols précités avec un aldéhyde.

Par résine époxy non chlorée ou non bromée (d2), on entend définir une résine époxy qui possède un poids d'équivalent époxy compris également entre 100 et 500 et qui consiste dans un éther glycidique obtenu en faisant réagir avec de l'épochlorhydrine un polyphénol non chloré ou non bromé choisi dans le groupe des phénols précités.

L'expression "poids d'équivalent époxy", qui apparaît ci-avant, peut être définie comme étant le poids de résine (en gramme) renfermant une fonction époxy

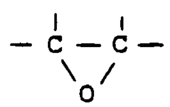 .

On choisit de préférence, et ceci s'applique aussi bien à la résine (d1) qu'à la résine (d2) qui peut être utillisée en mélange avec la résine (d1), une résine époxy possédant un poids d'équivalent époxy compris entre 150 et 300. Quant aux caractéristiques physiques de cette résine, elles vont de celles des résines liquides de faible viscosité (environ $2.10^{-3}$ Pa.s à 25 °C) jusqu'à celles de résines pâteuses dont le point de fusion est de l'ordre de 60 °C.

On utilise tout préférentiellement, quand on choisit d'utiliser une résine époxy (d), une résine époxy consistant soit dans une résine (d1) appartenant à la famille des éthers glycidiques des bis(hydroxyphényl)-alcanes,bromés sur les noyaux aromatiques, dont on a parlé ci-avant à propos de la définition détaillée de la résine (d1), soit dans le mélange d'une pareille résine (d1) avec une résine (d2) appartenant à la famille des éthers glycidiques des bis(hydroxyphényl)alcanes non bromés.

La quantité de résine époxy (d), quand on choisit d'utiliser un pareil ingrédient, représente 2 % à 20 % et, de préférence, 3 % à 15 % du poids du mélange bis-imide (a) + réactif acrylate (b).

Par ailleurs, quand on choisit d'utiliser une résine époxy (d), on a constaté que la quantité de chlore ou de brome apportée dans les polymères selon l'invention par cette résine époxy est de nature à influencer certaines propriétés des polymères durcis obtenus, notamment les propriétés en matière de stabilité thermique et celles en matière d'adhérence des polymères sur des métaux tel que par exemple le cuivre. Les meilleurs résultats sont alors obtenus dans ce cas lorsque cette quantité de chlore ou de brome apportée par la résine époxy (d), exprimée par le pourcentage en poids de chlore élémentaire ou de brome élémentaire par rapport au poids du mélange global bis-imide (a) + réactif acrylate (b) + résine époxy (d), représente au plus 6 % ; cette quantité de chlore ou de brome se situe de préférence dans l'intervalle allant de 1 à 4 %. On peut ajuster aisément la quantité de chlore ou de brome à la valeur souhaitée en mettant en oeuvre des résines époxy (d1) (utilisées en quantités représentant 2 à 20 % et de préférence 3 à 15 % du poids du mélange bis-imide + réactif acrylate) ayant une teneur en chlore ou en brome plus ou moins importante et/ou en partant de mélanges de résines époxy chlorées ou bromées (d1) avec des résines époxy non chlorées ou non bromées (d2).

Les polymères selon l'invention peuvent être préparés en masse par chauffage direct du bis-imide (a), du réactif acrylate (b) et du comporé imidazole (c), en présence éventuellement de la résine époxy (d), au moins jusqu'à l'obtention d'un mélange liquide homogène. La température peut varier en fonction de l'état physique des composés en présence mais elle se situe généralement entre 50° C et 300° C. Il est avantageux d'amener et de maintenir les composés de départ dans un état de mélange intime avant et

pendant le chauffage à l'aide par exemple d'une bonne agitation. De préférence, le composé imidazole (c) est ajouté au départ dans le mélange bien agité des réactifs (a) et (b) + éventuellement (d) de façon à permettre sa dispersion rapide. Lorsque ce composé est particulièrement actif, pour éviter son encapsulation dans le réseau polymère engendré, il est souhaitable de l'ajouter dans un solvant compatible avec le milieu réactionnel ; on a trouvé qu'il pouvait être intéressant d'utiliser comme solvant un des liquides organiques polaires dont on parle ci-après.

La préparation des polymères selon l'invention peut aussi être effectuée par chauffage du mélange des réactifs au sein d'un diluant organique qui est liquide dans une partie au moins de l'intervalle 50° C - 300° C. Parmi ces diluants, on peut mentionner en particulier des hydrocarbures aromatiques commes les xylènes et le toluène, des hydrocarbures halogénés comme les chlorobenzènes, des solvants polaires comme le dioxanne, le tétrahydrofuranne, l'oxyde de dibutyle, le diméthylformamide, le diméthylsulfoxyde, la N-méthylpyrrolidone, le diméthylacétamide, le méthylglycol, la méthyl-éthyl-cétone et la cyclohexanone. Les solutions ou suspensions de polymères peuvent être utilisées telles quelles pour de nombreux emplois ; on peut également isoler les polymères, par exemple par filtration, éventuellement après précipitation au moyen d'un non solvant approprié.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants polaires usuels tels que par exemple les liquides cités dans le paragraphe précédent et ne présentant pas de ramollissement uotable au dessous de la température à laquelle ils commencent à se dégrader.

Mais ces polymères peuvent également se présenter sous l'aspect de prépolymères (P) solubles dans les solvants organiques polaires tels que par exemple ceux cités ci-avant et présentant un point de ramollissement à une température inférieure à 200° C (en général ce point de ramollissement est compris entre 50° et 150° C). Ces prépolymères peuvent être obtenus en masse en chauffant le mélange des réactifs jusqu'à l'obtention d'un produit homogène ou pâteux à une température généralement située entre 50° et 180°C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du composé imidazole (c) et il s'agit de celle indiquée ci-avant à propos de la préparation directe de polymères durcis. La préparation des prépolymères peut également être effectuée en suspension ou en solution dans un diluant qui est liquide dans une partie au moins de l'intervalle 50° - 180°C.

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de chages à l'état de poudres, de sphères, de granules, de fibres ou de paillettes. Sous la forme de solutions, les prépolymères (P) peuvent être utilisés pour la réalisation d'articles intermédiaires préimprégnés dont l'armature peut être constituée par des matières fibreuses (sous forme de fibres simples, de nappes tissées ou non tissées) à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300° C, généralement comprises entre 150° et 300° C ; une mise en forme complémentaire peut être effectuée pendant le durcissement, éventuellement sous vide ou sous une pression super-atmosphérique, ces opérations pouvant également être consécutives.

Conformément à un mode de réalisation préféré de la présente invention, on opère en deux stades, le premier stade consistant à chauffer le mélange des réactifs entre 50° C et 180° C pour former un prépolymère (P), le second stade consistant à durcir le prépolymère (P), après lui avoir donné la forme désirée, par chauffage jusqu'à des températures de l'ordre de 300° C, généralement comprises entre 150°C et 300°C.

Cependant, conformément à un mode de réalisation plus préférentiel encore de la présente invention, on opère en deux stades, mais en utilisant dans le premier stade un procédé de préparation en continu du prépolymère (P) consistant à introduire isolément dans un malaxeur à vis extrudeuse :

- d'une part le bis-imide (a) à l'état solide divisé, et

- d'autre part le groupe des réactifs consitué par le réactif acrylate (b) à l'état liquide ou fondu, le composé imidazole (c) à l'état solide ou en solution et éventuellement la résine époxy (d) à l'état liquide, les différents réactifs de ce groupe pouvant eux-mêmes être introduits de leur côté ensemble ou séparément.

Par l'expression "malaxeur à vis extrudeuse", on entend désigner un appareil qui ne présente pas de zone morte lors de la progression de la matière. Des appareils de ce genre qui peuvent comporter une ou plusieurs vis sont décrits dans l'ouvrage de E.G. FISHER-Extrusion of Plastics (Interscience Publisher 1964) pages 104 à 108. Ces malaxeurs peuvent comporter deux vis sans fin s'engrenant intimement l'une dans l'autre et tournant dans le même sens ; un appareil de ce type équipé plus particulièrement pour la préparation de téréphtalates alcalins est décrit dans le brevet français FR-A-1 462 935. Une autre variété de malaxeurs utilisables est constituée par les appareils comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis. Des appareils de ce type sont décrits dans les brevets français FR-A-1 184 392, 1 184 393, 1 307 106 et 1 369 283.

Pour des raisons de commodité de mise en oeuvre, on préfère employer le bis-imide (a) sous la forme de particules dont les dimensions vont de 0,1 à 5 mm. Leur introduction dans le malaxeur peut être réglée par les dispositifs connus pour cet usage, tels que vis ou balances doseuses.

Le réactif acrylate (b) est alimenté à l'état liquide dans la zone de malaxage. Son introduction peut être effectuée au moyen d'une pompe doseuse. L'alimentation du réactif (b) est effectuée en un ou plusieurs points localisés de préférence en aval de la zone d'alimentation du bis-imide (a).

Le composé imidazole (c) peut être incorporé à l'état solide avec le réactif acrylate (b). Cependant, on préfère incorporer, avec le réactif acrylate, le composé imidazole (c) à l'état de solution dans un solvant polaire tel que ceux dont on a parlé ci-avant. Son introduction dans le malaxeur peut être effectuée aussi en tout autre point de la zone de malaxage localisé de préférence en aval de la zone d'alimentation du réactif acrylate (b).

S'agissant de la résine époxy (d), quand on choisit de l'utiliser, elle est introduite à l'état liquide dans la zone de malaxage en un ou plusieurs points localisés également de préférence en aval de la zone d'alimentation du bis-imide (a). De manière préférentielle dans ce cas, le réactif acrylate (b), le composé imidazole (c) et la résine époxy (d) sont introduits ensemble dans la zone de malaxage sous forme de mélange en un ou plusieurs points localisés en aval de la zone d'alimentation du bis-imide (a).

Le maintien de la zone de malaxage à la température choisie comprise entre 50° C et 180° C et, de préférence, entre 130° C et 160° C est généralement obtenu par chauffage contrôlé de l'enveloppe de la vis ou des vis sans fin de l'appareil. En ce qui concerne l'enveloppe, le chauffage peut être exercé de manière uniforme sur toute sa longueur mais on peut également disposer plusieurs zones de chauffage contiguës assurant à la zone de malaxage une température par exemple croissante dans le sens de progression de la matière. Dans la mise en oeuvre préférée où un ou plusieurs réactif(s) du groupe (b) + (c) + éventuellement (d) sont alimentés en aval de la zone d'introduction du réactif limie (a), on préfère que, en amont du premier point d'introduction du (ou des) réactif(s) appartenant au groupe précité, la température soit située dans l'intervalle 20 - 130°C.

Le temps de séjour des produits dans la zone de malaxage peut varier dans une certaine mesure en fonction du bis-imides (a) engagé, de la température adoptée et des quantités de réactifs mises en oeuvre. D'une manière générale, il est de l'ordre de 1 à 30 minutes. A la sortie du malaxeur, il est possible de régler le point de ramollissement du prépolymère (P) par chauffage de ce dernier dans un four dans des conditions de température et durée déterminées.

Les polymères selon l'invention intéressent les domaines de l'industrie qui requirent des matériaux doués de bonnes propriétés mécaniques et électriques ainsi que d'une grande inertie chimique à des températures de 200° à 300° C. A titre d'exemple, ils conviennent particulièrement bien pour la fabrication d'articles intermédiaires préimprégnés. Les articles préimprégnés sont utilisables pour la réalisation de pièces ayant des formes et des fonctions variées dans de nombreuses industries comme par exemple l'aéronautique. Ces pièces, appelées stratifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces détériorées.

Les exemples suivants sont données à titre illustratif, mais non limitatif.

EXEMPLE 1

Exemple qui décrit un polymère conforme à l'invention préparé par un procédé en discontinu à partir des réactifs (a), (b) et (c).

Dans un réacteur équipé d'un agitateur et placé dans un bain d'huile thermostaté à 160° C, on introduit :

- 320 parties en poids de N,N'-4,4'-diphénylméthane bis-maléimide (0,558 groupements maléimides pour 100 g de bis-imide), ayant un point de ramollissement de 157° C, et
- 78 parties en poids de réactif acrylate consistant dans le mélange à base de environ 80 % en poids d'un diacrylate d'époxy novolaque de formule (II) dans laquelle $R_1 = R_2 = H$ et n est un nombre compris entre 2 et 4 et 20 % en poids de triacrylate de triméthylolpropane ; ce réactif est disponible dans le commerce sous la marque déposée EBECRYL 629 de la Société UCB et il possède environ 0,5 doubles liaisons acryliques libres pour 100 g de réactif.

Le mélange est agité durant 40 minutes jusqu'à l'obtention d'un masse homogène. On ajoute alors 0,20 parties en poids d'imidazole sous la forme d'une solution dans la N-méthylpyrrolidone renfermant 10 % en poids d'imidazole.

On maintient l'agitation du milieu réactionnel pendant 20 minutes sous 160° C, puis on coule le mélange sur un plateau. Après refroidissement, le prépolymère obtenu est broyé et on obtient un poudre jaune qui est soluble dans les solvants comme par exemple la N-méthylpyrrolidone, la cyclohexanone et le diméthylformamide. Le prépolymère obtenu présente un point de ramollissement de 83° C ; sa viscosité, mesurée en solution à 50 % en poids dans la cyclohexanone, est de 0,35 Pa.s.

On utilise une solution de prépolymère à 50 % en poids dans la N-méthylpyrrolidone pour enduire un tissu de verre fabriqué par la Société PORCHER sous la référence 7628 dont le grammage est de 200 g/$m^2$ et ayant subi un traitement par du gamma-aminopropyltriéthoxysilane (silane A 1100 d'UNION CARBIDE). Le tissu imprégné contient 35 g de prépolymère pour 65 g de tissu ; on le sèche en atmosphère ventilée à 130° C pendant 5 minutes. On découpe ensuite 6 carrés (15x 15 cm) que l'on empile avec une feuille de cuivre de 35 µm d'épaisseur placée sur l'une des faces extérieures de l'empilement et on place l'ensemble entre les plateaux d'une presse dans les conditions suivantes :

- pression : $40.10^5$ Pa,
- chauffage des plateaux de la presse : 15 minutes à 150° C, puis 45 minutes à 200° C.

Pendant l'opération de stratification, on observe un taux de fluage du polymère d'environ 20 % en poids. Après un traitement thermique complémentaire à 235° C pendant 6 heures, on examine l'adhérence du cuivre sur le stratifié à 6 plis préparé : cette adhérence, mesurée au dynamomètre par traction du cuivre à 90° d'angle (selon la norme MIL P 55 617 B avec une vitesse de traction de 55 mm/min), est de l'ordre de 15 N/cm ; cette valeur se maintient après un viellissement de 1000 heures à 200° C.

A titre d'essai comparatif, on a reproduit l'exemple 1 prédédent, mais en absence d'imidazole. Le mélange réactionnel chauffé à 160° C se prend en masse après 1 heure 30 minutes de mélange. Après refroidissement et broyage, la poudre obtenue a un point de ramollissement de 70° C ; elle est très peut soluble dans les solvants précités. L'analyse montre que le bis-maléimide a été peu ou pas engagé dans une réaction avec le réactif acrylate. Le prépolymère ainsi obtenu ne convient pas pour les applications décrites, en particuliers pour la préparation de stratifiés.

EXEMPLE 2

Exemple qui décrit un polymère conforme à l'invention préparé par un procédé en continu à partir des réactifs (a), (b) et (c).

L'appareillage utilisé est un malaxeur de laboratoire BUSS connu sous l'appellation "Ko-Malaxeur" type PR 46. Ce malaxeur comprend une vis sans fin formée d'un arbre comportant des filets hélicoïdaux interrompus, les interruptions formant des ailettes séparées ; elle est entraînée par un mécanisme approprié. La vis est logée dans un corps comprenant trois enveloppes cylindriques coaxiales contiguës à double paroi ; la paroi interne du corps de malaxage comporte des saillies en forme de dents. La vis est soumise à un mouvement de rotation et simultanément à un mouvement oscillatoire dans la direction de son axe, ce qui crée un échange de matière dans deux directions.

Dans la première enveloppe, on fait circuler de l'eau à 20° C et dans les deux autres, un fluide chauffé à 155° C. La vitesse de rotation de la vis est de 60 tours/minutes.

Dans la première partie du malaxeur (correspondant à la première enveloppe), on introduit du N,N'-4,4'-diphénylméthane-bis-maléimide par l'intermédiaire d'une balance doseuse à raison de 1200 g/h ; le bis-maléimide est introduit à l'état de grains dont la dimension moyenne est de l'ordre de 0,25 mm.

Dans la seconde partie du malaxeur (correspondant à la seconde enveloppe), on introduit l'ensemble : réactif acrylate conforme à l'exemple 1 + solution d'imidazole dans la N-méthylpyrrolidone contenant 25 % en poids d'imidazole, à raison de 304,8 g/h.

Le dosage des réactifs est tel que le bis-maléimide représente 79,9 % du poids de l'ensemble bis-maléimide + réactif acrylate et l'imidazole 0,05 % du poids du même ensemble.

Le temps de séjour moyen de la matière dans le malaxeur est de l'ordre de 6 minutes 30 secondes. A la sortie de l'appareil on recueille un prépolymère dont le point de ramollissement est de l'ordre de 55° C. Ce prépolymère porté à 170° C pendant 17 minutes présente un point de ramollissement de 80° C. Il est soluble dans des solvants comme par exemple la N-méthylpyrrolidone, la cyclohexanone et le diméthylformamide et il présente une viscosité (mesurée comme indiqué à l'exemple 1) de 0,35 Pa.s.

Avec le prépolymère ainsi obtenu, on prépare des préimprégnés et des stratifiés comportant 18 plis (18 couches de préimprégnés) dans les conditions décrites ci-avant à l'exemple 1 (à noter qu'aucune feuille de cuivre n'est utilisée ici). Après recuit à 235° C pendant 6 heures, les stratifiés présentent les caractéristiques mécaniques suivantes :

- résistance en flexion mesurée à 200° C (selon la norme NF T 51 001) : 350 MPa,
- module enflexion : 28 000 MPa.

Le prépolymère obtenu est soumis par ailleurs à des mesures en TMA ("Thermal Mechanical Analysis" ou Analyse Mécanique Thermique ; norme ASTM E 831-81 avec une vitesse de montée en température de 5° C/min). Sur le produit recuit à 235° C, on observe que le coefficient de dilatation moyen entre 40° C et 300° C est de 40 µm/m/°C et que la température de transition vitreuse est de 340° C.

EXEMPLE 3

Exemple qui décrit un polymère conforme à l'invention préparé par un procédé en continu à partir des réactifs (a), (b), (c) et (d).

L'appareillage utilisé est le malaxeur de laboratoire BUSS connu sous l'appellation "KO-Malaxeur" type PR 46 décrit ci-avant dans l'exemple 2.

Dans la première enveloppe du malaxeur, on fait circuler de l'eau à 20°C et dans les deux autres, un fluide chauffé à 155°C. La vitesse de rotation de la vis est de 60 tours/minute.

Dans la première partie du malaxeur (correspondant à la première enveloppe), on introduit du N,N'-4,4'-diphénylméthane-bis-maléimide par l'intermédiaire d'une balance doseuse à raison de 1200 g/h ; le bis-maléimide est introduit à l'état de grains dont la dimension moyenne est de l'ordre de 0,25 mm.

Dans la second partie du malaxeur (correspondant à la seconde enveloppe), on introduit, sous forme de mélange, l'ensemble : réactif acrylate + solution d'imidazole dans la N-méthylpyrrolidone contenant 25 % en poids d'imidazole + résine époxy bromée, à raison de 495,4 g/h.

Le dosage des réactifs est tel que : le bis-maléimide représente 78 % du poids de l'ensemble bis-maléimide + réactif acrylate ; l'imidazole représente 0,05 % du poids de l'ensemble bis-maléimide + réactif acrylate ; et la résine époxy bromée représente 10% du poids de l'ensemble bis-maléimide + réactif acrylate.

Le réactif acrylate consiste dans le mélange décrit ci-avant dans l'exemple 1.

La résine époxy bromée utilisée ici résulte de la condensation de bisphénol A tétrabromé et d'epichlorhydrine. Elle possède un taux de brome de 20 % en poids et un poids d'équivalent époxy de 220. Elle est disponible dans le commerce sous la marque déposé ARALDITE de la Société CIBA, type LY 8047. La quantité de brome apportée par la résine époxy, exprimée par le pourcentage en poids de brome élémentaire par rapport au poids de la composition globale bis-imide + réactif acrylate + résine époxy, est égale à 1,82 %.

Le temps de séjour moyen de la matière dans le malaxeur est de l'ordre de 6 minutes 30 secondes. A la sortie de l'appareil on recueille un prépolymère dont le point de ramollissement est de l'ordre de 53°C. Ce prépolymère porté à 160°C pendant 15 minutes présente un point de ramollissement de 75°C. Il est soluble dans des solvants comme par exemple la N-méthylpyrrolidone, le diméthylformamide ou des mélanges de ces solvants avec des solvants à plus bas point d'ébullition comme la méthylisobutylcétone.

Avec une première partie du prépolymère obtenu, on prépare des préimprégnés et des stratifiés cuivrés à 6 plis (6 couches de préimprégnés). Dans cette optique, on utilise une solution de prépolymère à 50 % en poids dans la N-méthylpyrrolidone pour enduire un tissu de verre fabriqué par la Société PORCHER sous la référence 7628 dont le grammage est de 200 g/m$^2$ et ayant subi un traitement par du gamma-aminopropyltriéthoxysilane (silane A 1100 d'UNION CARBIDE). Le tissu imprégné contient 35 g de prépolymère pour 65 de tissu ; on le sèche en atmosphère ventilée à 130°C pendant 5 minutes. On découpe ensuite 6 carrés (15 x 15 cm) que l'on empile avec une feuille de cuivre de 35 µm d'épaisseur

placée sur l'une des faces extérieures de l'empilement et on place l'ensemble entre les plateaux d'une presse dans les conditions suivantes :

- pression : $40.10^5$ Pa,
- chauffage des plateaux de la presse : 15 minutes à 150 ° C, puis 45 minutes à 200 ° C.

Pendant l'opération de stratification, on observe un taux de fluage du polymère d'environ 20 % en poids. Après un traitement thermique complémentaire à 235 ° C pendant 4 heures, on examine l'adhérence du cuivre sur le stratifié à 6 plis préparé : cette adhérence, mesurée au dynamomètre par traction du cuivre à 90 ° d'angle (selon la norme MIL P 55 617 B avec une vitesse de traction de 55 mm/min), est de l'ordre de 15 N/cm ; cette valeur se maintient après une vieillissement de 1000 heures à 200 ° C.

Avec une second partie du prépolymère obtenu précédemment, on prépare des préimprégnés et des stratifiés comportant 6 plis dans les conditions décrites ci-avant (à noter qu'aucune feuille de cuivre n'est utilisée ici). Après une post-cuisson à 235 ° C pendant 4 heures, on effectue des mesures de combustibilité à l'aide du test UL 94 vertical (épaisseur des éprouvettes à base de stratifié : 0,8 mm ; le temps de combustion est donné en seconde après conditionnement de 48 heures, à 23 ° C et sous 50 % d'humidité relative ; le classement est établi sur la moyenne de 10 résultats : 5 éprouvettes et 2 tests sur chaque éprouvette) :

- temps de combustion : 3 s ;
- classement : VO.

## Revendications

### Revendications pour les Etats contractants suivants : AT, BE, CH, DE, FR, GB, IT, LI, LU, NL, SE

**1.** Polymères à groupements imides caractérisés en ce qu'ils comprennent le produit de réaction, à une température allant de 50 ° C à 300 ° C, entre :

- (a) un N,N'-bis-maléimide de formule :

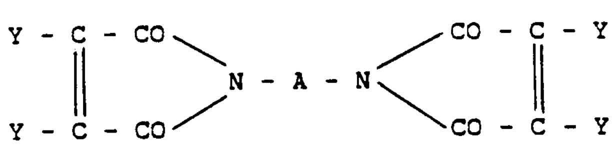

(I)

dans laquelle :

. les symboles Y, identiques ou différents, représentent chacun un atome d'hydrogène, un radical méthyle ou un atome de chlore ;

. le symbole A représente un radical divalent choisi dans le groupe constitué par les radicaux : cyclohexylènes ; phénylènes; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

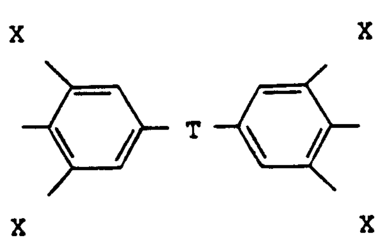

dans laquelle T représente un lien valentiel simple ou un groupement :

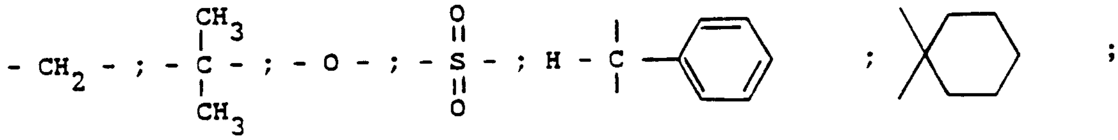

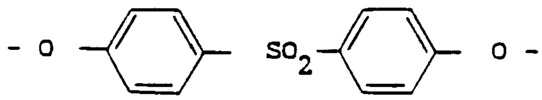

et les symboles X, identiques ou différents, représentent chacun un atome d'hydrogène, un radical méthyle, éthyle, propyle ou isopropyle ;

- (b) un réactif acrylate consistant :
  * soit (b1) dans un (méth)acrylate d'époxy novolaque répondant à la formule générale :

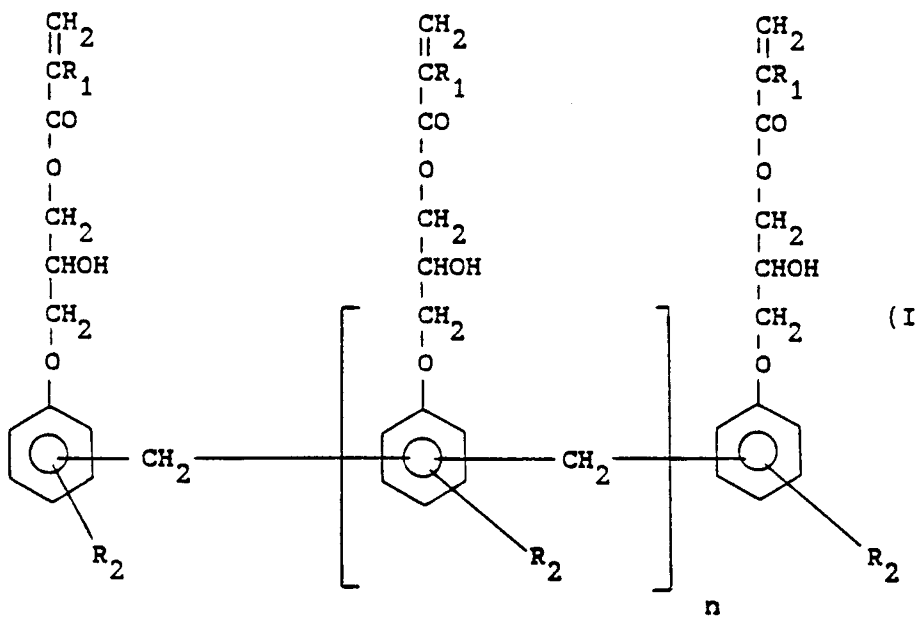

(II)

dans laquelle :

. les symboles $R_1$ et $R_2$, identiques ou différents, représentent chacun un atome d'hydrogène ou un radical méthyle ;

. n est un nombre positif se situant dans l'intervalle allant de 0,1 à 8 ;

  * soit dans le mélange du composé (b1) précité avec au plus 30 % en poids, par rapport au poids du mélange (b1) + (b2), d'un composé (b2) de formule générale :

$$(CH_2 = CR_3 - CO - O)_3 B \qquad (III)$$

dans laquelle :

. le symbole $R_3$ représente un atome d'hydrogène ou un radical méthyle,

. le symbole B représente un radical organique trivalent dérivé d'un hydrocarbure aliphatique saturé linéaire ou ramifié ayant de 1 à 20 atomes de carbone et pouvant renfermer un ou plusieurs ponts oxygène et une ou plusieurs fonctions hydroxyles,

. (c) un composé imidazole en quantités catalytiques,

. les quantités de composés (a) et (b) sont choisies pour obtenir un rapport r représentant le rapport suivant :

$$\frac{\text{nombre de groupements maléimide apportés par le composé (a)}}{\text{nombre de doubles liaisons acryliques apportées par l'acrylate (b)}}$$

compris entre 1,7/1 et 10/1.

2. Polymères selon la revendication 1, caractérisés en ce que le milieu de réaction qui sert à les préparer contient en outre une résine époxy (d) consistant soit dans une résine époxy chlorée ou bromée (d1), soit dans le mélange de la résine (d1) avec une résine époxy non chlorée ou non bromée (d2).

3. Polymères selon l'une quelconque des revendications 1 ou 2, caractérisés en ce que le bis-maléimide (a) de formule (I) est choisi dans le groupe formé par :
   - le N,N'-métaphénylène-bis-maléimide,
   - le N,N'-paraphénylène-bis-maléimide,
   - le N,N'-4,4'-diphénylméthane-bis-maléimide,
   - le N,N'-4,4'-diphényléther-bis-maléimide,
   - le N,N'-4,4'-diphénylsulphone-bis-maléimide,
   - le N,N'-cyclohexylène-1,4-bis-maléimide,
   - le N,N'-4,4'-diphényl-1,1 cyclohexane-bis-maléimide,
   - le N,N'-4,4'-diphényl-2,2 propane-bis-maléimide,
   - le N,N'-4,4'-triphénylméthane-bis-maléimide,
   - le N,N'-méthyl-2 phénylène-1,3-bis-maléimide,
   - le N,N'-méthyl-4 phénylène-1,3-bis-maléimide,
   - le N,N'-méthyl-5 phénylène-1,3-bis-maléimide.

4. Polymères selon l'une quelconque des revendications 1 à 3 caractérisés en ce que le réactif acrylate (b) est choisi dans le groupe formé par les acrylates d'époxy novolques (b1) de formule (II) dans lesquelles $R_1$ et $R_2$ représentent un atome d'hydrogène et n est un nombre positif se situant dans l'intervalle allant de 0,1 à 5, ces composés étant pris seuls ou en mélange avec au plus 25 % en poids, par rapport au poids du mélange (b1) + (b2), d'un composé (b2) consistant dans le triacrylate de triméthylolpropane.

5. Polymères selon l'une quelconque des revendications 1 à 4, caractérisés en ce que le composé imidazole (c) répond à la formule générale :

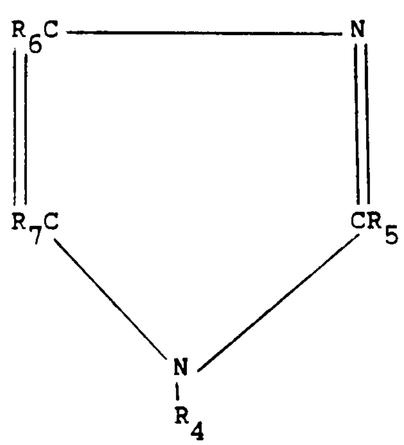

(IV)

dans laquelle $R_4$, $R_5$, $R_6$ et $R_7$, identiques ou différents, représentent chacun : un atome d'hydrogène, un radical alkyle ou alcoxy ayant de 1 à 20 atomes de carbone, vinyle, phényle, nitro, $R_6$ pouvant former avec $R_7$ et les atomes de carbone auxquels sont liés ces radicaux un cycle unique comme par exemple un cycle benzénique.

6. Polymère selon la revendication 5, caractérisés en ce que le composé imidazole (c) est choisi dans le groupe formé par l'imidazole ou glyoxaline, le méthyl-1 imidazole, le méthyle-2 imidazole, le diméthyl-1,2 imidazole, le vinyl-1 imidazole, le vinyl-1 méthyl-2 imidazole et le benzimidazole.

7. Polymères selon l'une quelconque des revendications 2 à 6, caractérisés en ce que, dans le cas de l'emploi d'une résine époxy (d), on utilise :

- comme résine époxy (d1) : une résine époxy qui possède un poids d'équivalent époxy compris entre 100 et 500 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis(hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes ; le résorcinol ; l'hydroquinone ; le pyrocatéchol ; le dihydroxy-4,4' diphényle ; et les produits de condensation des phénols précités avec un aldéhyde ;
- éventuellement, comme résine époxy (d2) : une résine époxy qui possède un poids d'équivalent époxy compris également entre 100 et 500 et qui consiste dans un éther glycidique obtenu en faisant réagir avec de l'épichlorhydrine un polyphénol non chloré ou non bromé choisi dans le groupe des phénols précités.

**8.** Polymères selon l'une quelconque des revendications 1 à 7, caractérisés en ce que le taux de composé imidazole (c), exprimé en nombre de moles de composé (c) pour 100 g du bis-imide (a), se situe dans l'intervalle allant de $0,15.10^{-3}$ à $6.10^{-3}$.

**9.** Polymères selon l'une quelconque des revendications 2 à 8, caractérisés en ce que, dans le cas de l'emploi d'une résine époxy (d), d'une part la quantité de résine époxy (d) représente 2 % à 20 % du poids du mélange bis-imide (a) + réactif acrylate (b), et d'autre part la quantité de chlore ou de brome apportée par la résine époxy (d), exprimée par le pourcentage en poids de chlore élémentaire ou de brome élémentaire par rapport au poids du mélange global bis-imide (a) + réactif acrylate (b) + résine époxy (d), représente au plus 6 %.

**10.** Polymères selon l'une quelconque des revendications 1 à 9, caractérisés en ce qu'ils se trouvent sous forme de polymères durcis, insolubles daàs les solvants organiques polaires usuels et ne présentant pas de ramollissement notable au dessous de la température à laquelle ils commencent à se dégrader.

**11.** Polymères selon l'une quelconque des revendications 1 à 9, caractérisés en ce qu'ils se trouvent sous forme de prépolymères thermodurcissables (P) solubles dans les solvants organiques polaires usuels et présentent un point de ramollissement à une température inférieure à 200 ° C.

**12.** Procédé de préparation de polymères durcis selon les revendications 1 à 10, caractérisé en ce qu'il consiste à chauffer le mélange des réactifs entre 50 ° C et 180 ° C pour former dans un premier temps un prépolymères (P), puis a provoqué le durcissement du prépolymères (P) par chauffage à une température comprise entre 150 ° C et 300 ° C.

**13.** Procédé de préparation selon la revendication 12, caractérisé en ce que l'on utilise un procédé de préparation en continu du prépolymère (P) consistant à introduire isolément dans un malaxeur à vis extrudeuse :
- d'une part le bis-imide (a) à l'état solide divisé, et
- d'autre part le groupe des réactifs consitué par le réactif acrylate (b) à l'état liquide ou fondu, le composé imidazole (c) à l'état solide ou en solution et éventuellement la résine époxy (d) à l'état liquide, les différents réactifs de ce groupe pouvant eux-mêmes être introduits de leur côté ensemble ou séparément.

**Revendications pour l'Etat contractant suivant : ES**

**1.** Procédé de préparation de polymères à groupements imides se trouvant sous forme de polymères durcis, insolubles dans les solvants organiques polaires usuels et ne présentant pas de ramollissement notable au dessous de la température à laquelle ils commencent à se dégrader, caractérisé en ce qu'il consiste à faire réagir, à une température comprise entre 50 ° C et 300 ° C, les réactifs suivants :

- (a) un N,N'-bis-maléimide de formule :

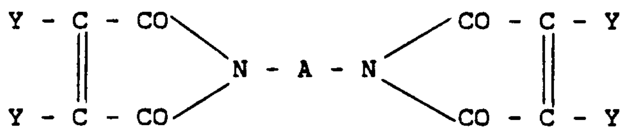

(I)

dans laquelle :

. les symboles Y, identiques ou différents, représentent chacun un atome d'hydrogène, un radical méthyle ou un atome de chlore ;

. le symbole A représente un radical divalent choisi dans le groupe constitué par les radicaux : cyclohexylènes ; phénylènes; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

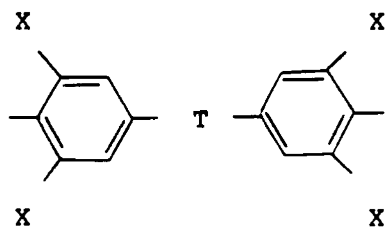

dans laquelle T représente un lien valentiel simple ou un groupement :

- $CH_2$ - ; 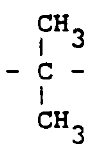 ; - O - ; 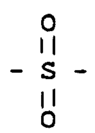 ; 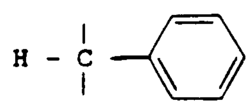 ; 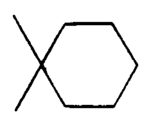 ;

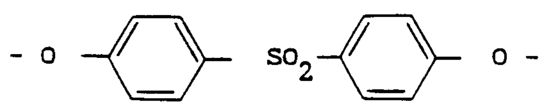

et les symboles X, identiques ou différents, représentent chacun un atome d'hydrogène, un radical méthyle, éthyle, propyle ou isopropyle ;

- (b) un réactif acrylate consistant :

* soit (b1) dans un (méth)acrylate d'epoxy novolaque répondant à la formule générale :

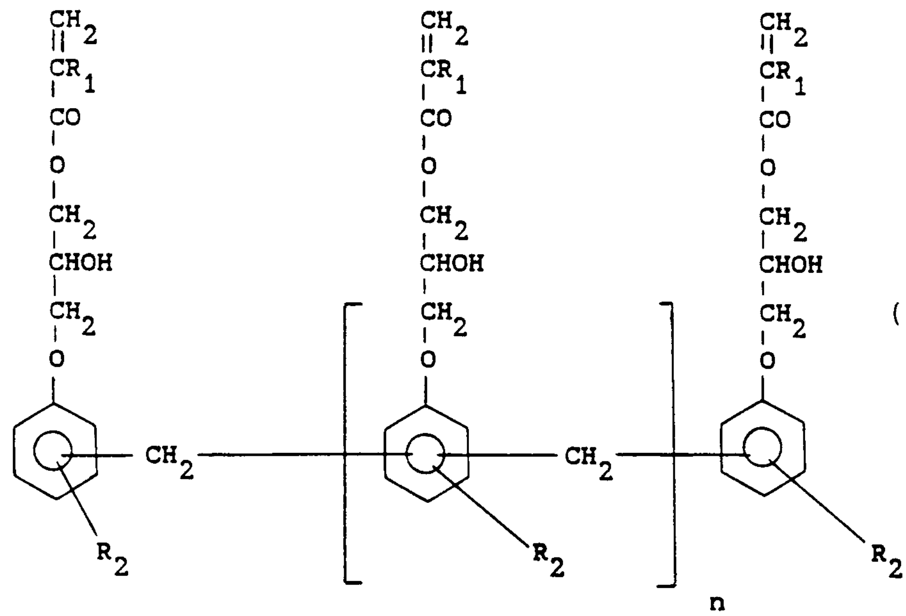

(II)

dans laquelle :

. les symboles $R_1$ et $R_2$, identiques ou différents, représentent chacun un atome d'hydrogène ou un radical méthyle ;

. n est un nombre positif se situant dans l'intervalle allant de 0,1 à 8 ;

* soit dans le mélange du composé (b1) précité avec au plus 30 % en poids, par rapport au poids du mélange (b1) + (b2), d'un composé (b2) de formule générale :

$$(CH_2 = CR_3 - CO - O)_3 B \qquad (III)$$

dans laquelle :

. le symbole $R_3$ représente un atome d'hydrogène ou un radical méthyle,

. le symbole B représente un radical organique trivalent dérivé d'un hydrocarbure aliphatique saturé linéaire ou ramifié ayant de 1 à 20 atomes de carbone et pouvant renfermer un ou plusieurs ponts oxygène et une ou plusieurs fonctions hydroxyles,

. (c) un composé imidazole en quantités catalytiques,

. éventuellement une résine époxy (d) consistant soit dans une résine époxy chlorée ou bromée (d1), soit dans le mélange de la résine (d1) avec une résine époxy non chlorée ou non bromée (d2) ; et en ce que les quantités de composés (a) et (b) sont choisies pour obtenir un rapport r représentant le rapport suivant :

$$\frac{\text{nombre de groupements maléimide apportés par le composé (a)}}{\text{nombre de doubles liaisons acryliques apportées par l'acrylate (b)}}$$

compris entre 1,7/1 et 10/1.

**2.** Procédé de préparation de polymères à groupements imides se trouvant sous forme de prépolymères thermodurcissables (P) solubles dans les solvants organiques polaires et présentant un point de ramollissement à une température inférieure à 200 °C, caractérisé par le fait que l'on chauffe directement le mélange des réactifs (a), (b), (c) et éventuellement (d) définis ci-avant dans la revendication 1 à une température comprise entre 50 °C et 180 °C jusqu'à l'obtention d'un produit homogène liquide ou pâteux.

**3.** Procédé selon la revendication 1, caractérisé en ce qu'il consiste à chauffer le mélange des réactifs entre 50 ° C et 180 ° C pour former dans un premier temps un prépolymère (P), puis à provoquer le durcissement du prépolymère (P) par chauffage à une température comprise entre 150 ° C et 300 ° C.

**4.** Procédé selon la revendication 2 ou 3, caractérisé en ce que l'on utilise un procédé de préparation en continu du prépolymère (P) consistant à introduire isolément dans un malaxeur à vis extrudeuse :
- d'une part le bis-imide (a) à l'état solide divisé, et
- d'autre part le groupe des réactifs consitué par le réactif acrylate (b) à l'état liquide ou fondu, le composé imidazole (c) à l'état solide ou en solution et éventuellement la résine époxy (d) à l'état liquide, les différents réactifs de ce groupe pouvant eux-mêmes être introduits de leur côté ensemble ou séparément.

**5.** Procédé selon la revendication 4, caractérisé en ce que le réactif acrylate (b), le composé imidazole (c) et éventuellement la résine époxy (d) sont alimentés en aval de la zone d'alimentation du réactif imide (a).

**6.** Procédé selon l'une quelconque des revendications 1 à 5, caractérisé en ce que le bis-maléimide (a) de formule (I) est choisi dans le groupe formé par :
- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide.

**7.** Procédé selon l'une quelconque des revendications 1 à 6, caractérisé en ce que le réactif acrylate (b) est choisi dans le groupe formé par les acrylates d'époxy novolaques (b1) de formule (II) dans lesquelles $R_1$ et $R_2$ représentent un atome d'hydrogène et n est un nombre positif se situant dans l'intervalle allant de 0,1 à 5, ces composés étant pris seuls ou en mélange avec au plus 25 % en poids, par rapport au poids du mélange (b1) + (b2), d'un composé (b2) consistant dans le triacrylate de triméthylolpropane.

**8.** Procédé selon l'une quelconque des revendications 1 à 7, caractérisé en ce que le composé imidazole (c) répond à la formule générale :

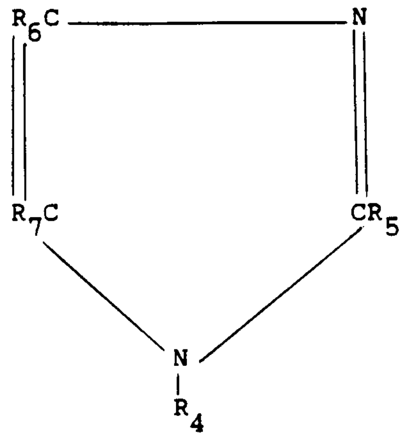

(IV)

dans laquelle $R_4$, $R_5$, $R_6$ et $R_7$, identiques ou différents, représentent chacun : un atome d'hydrogène,

un radical alkyle ou alcoxy ayant de 1 à 20 atomes de carbone, vinyle, phényle, nitro, $R_6$ pouvant former avec $R_7$ et les atomes de carbone auxquels sont liés ces radicaux un cycle unique comme par exemple un cycle benzénique.

**9.** Procédé selon la revendication 8, caractérisé en ce que le composé imidazole (c) est choisi dans le groupe formé par l'imidazole ou glyoxaline, le méthyl-1 imidazole, le méthyl-2 imidazole, le diméthyl-1,2 imidazole, le vinyl-1 imidazole, le vinyl-1 méthyl-2 imidazole et le benzimidazole.

**10.** Procédé selon l'une quelconque des revendications 1 à 9, caractérisé en ce que, dans le cas de l'emploi d'une résine époxy (d), on utilise :
- comme résine époxy (d1) : une résine époxy qui possède un poids d'équivalent époxy compris entre 100 et 500 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis(hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes ; le résorcinol ; l'hydroquinone ; le pyrocatéchol ; le dihydroxy-4,4' diphényle ; et les produits de condensation des phénols précités avec un aldéhyde ;
- éventuellement, comme résine époxy (d2) : une résine époxy qui possède un poids d'équivalent époxy compris également entre 100 et 500 et qui consiste dans un éther glycidique obtenu en faisant réagir avec de l'épichlorhydrine un polyphénol non chloré ou non bromé choisi dans le groupe des phénols précités.

**11.** Procédé selon l'une quelconque des revendications 1 à 10, caractérisé en ce que le taux de composé imidazole (c), exprimé en nombre de moles de composé (c) pour 100 g du bis-imide (a), se situe dans l'intervalle allant de $0,15.10^{-3}$ à $6.10^{-3}$.

**12.** Procédé selon l'une quelconque des revendications 1 à 11, caractérisé en ce que, dans le cas de l'emploi d'une résine époxy (d), d'une part la quantité de résine époxy (d) représente 2 % à 20 % du poids du mélange bis-imide (a) + réactif acrylate (b), et d'autre part la quantité de chlore ou de brome apportée par la résine époxy (d), exprimée par le pourcentage en poids de chlore élémentaire ou de brome élémentaire par rapport au poids du mélange global bis-imide (a) + réactif acrylate (b) + résine époxy (d), représente au plus 6 %.

## Claims

**Claims for the following Contracting States : AT, BE, CH, DE, FR, GB, IT, LI, LU, NL, SE**

**1.** Polymers containing imide groups, characterised in that they comprise the product of reaction, at a temperature ranging from 50 °C to 300 °C, between:
- (a) an N,N'-bismaleimide of formula :

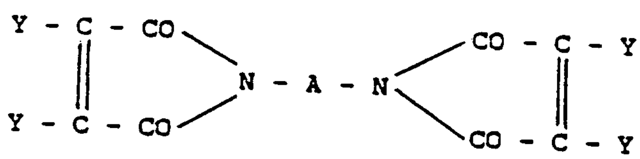

(I)

in which:
each of the symbols Y, which are identical or different, denotes a hydrogen atom, a methyl radical or a chlorine atom;
the symbol A denotes a divalent radical chosen from the group consisting of cyclohexylene, phenylene, 4-methyl-1,3-phenylene, 2-methyl-1,3-phenylene, 5-methyl-1,3-phenylene and 2,5-diethyl-3-methyl-1,4-phenylene radicals, and the radicals of formula:

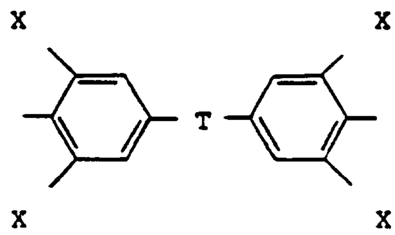

in which T denotes a single valency bond or a group:

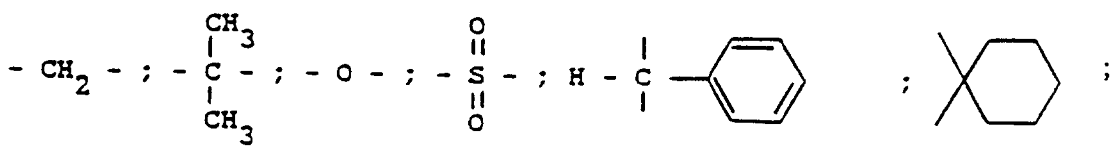

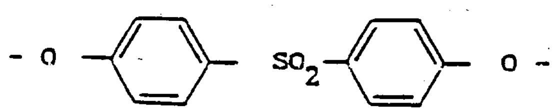

and each of the symbols X, which are identical or different, denotes a hydrogen atom or a methyl, ethyl, propyl or isopropyl radical;

- (b) an acrylate reactant consisting:
  either (b1) of a novolak epoxy (meth)acrylate corresponding to the general formula:

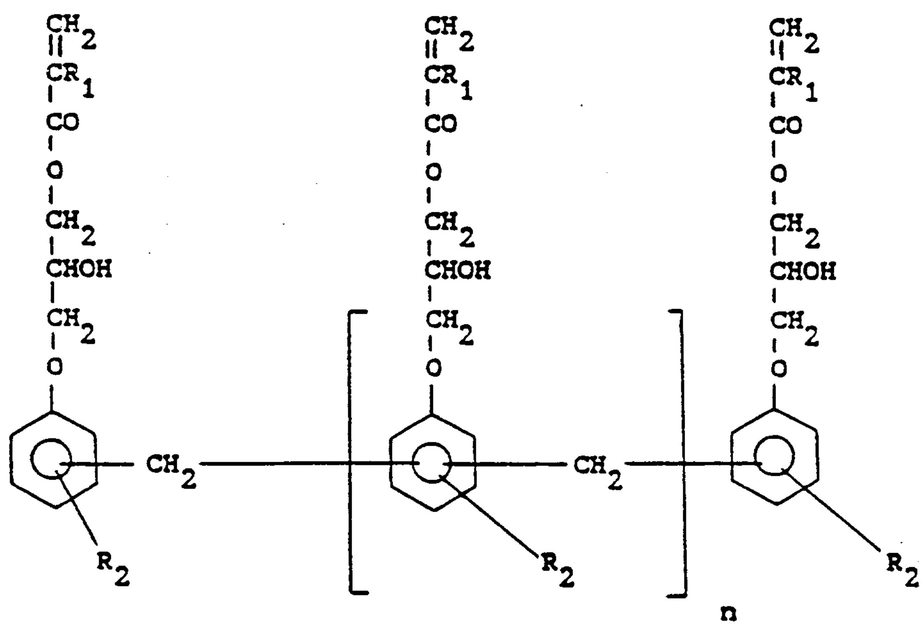

(II)

in which:

each of the symbols $R_1$ and $R_2$, which are identical or different, denotes a hydrogen atom or a methyl radical; and

n is a positive number situated in the range from 0.1 to 8;

or of the mixture of the abovementioned compound (b1) with not more than 30 % by weight, relative to the weight of the mixture (b1) + (b2), of a compound (b2) of general formula

$$(CH_2 = CR_3 - CO - O)_3\!\!-\!\!B \qquad (III)$$

in which:
the symbol $R_3$ denotes a hydrogen atom or a methyl radical;
the symbol B denotes a trivalent organic radical derived from a linear or branched saturated aliphatic hydrocarbon containing from 1 to 20 carbon atoms and capable of containing one or more oxygen bridges and one or more hydroxyl groups; and

(c) an imidazole compound in catalytic amounts,

the amounts of compounds (a) and (b) being chosen so as to obtain a ratio r, representing the following ratio:

$$\frac{\text{number of maleimide groups contributed by the compound (a)}}{\text{number of acrylic double bonds contributed by the acrylate (b)}},$$

of between 1.7/1 and 10/1.

**2.** Polymers according to claim 1, characterised in that the reaction medium which is used to prepare them also contains an epoxy resin (d) consisting either of a chlorinated or brominated epoxy resin (d1), or of a mixture of the resin (d1) with an unchlorinated or unbrominated epoxy resin (d2).

**3.** Polymers according to either of claims 1 and 2, characterised in that the bismaleimide (a) of formula (I) is chosen from the group consisting of:

- N,N'-meta-phenylenebismaleimide,
- N,N'-para-phenylenebismaleimide,
- N,N'-4,4'-diphenylmethanebismaleimide,
- N,N'-4,4'-diphenyl ether bismaleimide,
- N,N'-4,4'-diphenylsulphonebismaleimide,
- N,N'-1,4-cyclohexylenebismaleimide,
- N,N'-4,4'-diphenyl-1,1-cyclohexanebismaleimide,
- N,N'-4,4'-(2,2-diphenylpropane)bismaleimide,
- N,N'-4,4'-triphenylmethanebismaleimide,
- N,N'-2-methyl-1,3-phenylenebismaleimide,
- N,N'-4-methyl-1,3-phenylenebismaleimide, and
- N,N'-5-methyl-1,3-phenylenebismaleimide.

**4.** Polymers according to any one of claims 1 to 3, characterised in that the acrylate reactant (b) is chosen from the group consisting of the novolak epoxy acrylates (b1) of formula (II), in which $R_1$ and $R_2$ denote a hydrogen atom and n is a positive number situated in the range from 0.1 to 5, these compounds being taken by themselves or mixed with not more than 25 % by weight, relative to the weight of the mixture (b1) + (b2), of a compound (b2) consisting of trimethylolpropane triacrylate.

**5.** Polymers according to any one of claims 1 to 4, characterised in that the imidazole compound (c) corresponds to the general formula:

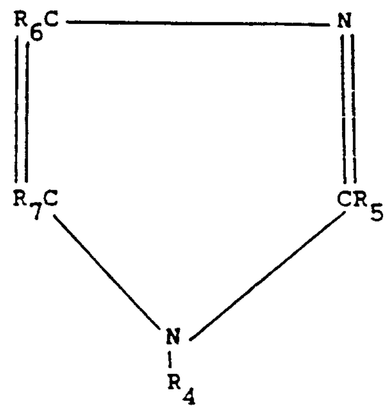

(IV)

in which each of $R_4$, $R_5$, $R_6$ and $R_7$, which are identical or different, denotes: a hydrogen atom, an alkyl or alkoxy radical containing from 1 to 20 carbon atoms, or a vinyl, phenyl or nitro radical, it being possible for $R_6$ to form with $R_7$ and the carbon atoms to which these radicals are linked a single ring such as, for example, a benzene ring.

**6.** Polymer according to claim 5, characterised in that the imidazole compound (c) is chosen from the group consisting of imidazole or glyoxaline, 1-methylimidazole, 2-methylimidazole, 1,2-dimethylimidazole, 1-vinylimidazole, 1-vinyl-2-methylimidazole and benzimidazole.

**7.** Polymers according to any one of claims 2 to 6, characterised in that, in the case where an epoxy resin (d) is employed, the following are used:
- as epoxy resin (d1): an epoxy resin which has an epoxy equivalent weight of between 100 and 500 and which consists of a glycidyl ether obtained by reacting epichlorohydrin with a derivative which is chlorinated or brominated on the aromatic ring(s) and which originates from a polyphenol chosen from the group consisting of: the class of bis(hydroxyphenyl)alkanes such as 2,2-bis(4-hydroxyphenyl)propane, bis(4-hydroxyphenyl)methane, bis(4-hydroxyphenyl)-methylphenylmethane and bis(4-hydroxyphenyl)tolylmethanes, resorcinol, hydroquinone, pyrocatechol, 4,4'-dihydroxydiphenyl, and the products of condensation of the abovementioned phenols with an aldehyde;
- optionally, as epoxy resin (d2): an epoxy resin which has an epoxy equivalent weight which is also between 100 and 500 and which consists of a glycidyl ether obtained by reacting epichlorohydrin with an unchlorinated or unbrominated polyphenol chosen from the group of the abovementioned phenols.

**8.** Polymers according to any one of claims 1 to 7, characterised in that the content of imidazole compound (c), expressed as the number of moles of compound (c) per 100 g of bisimide (a), is situated in the range from $0.15 \times 10^{-3}$ to $6 \times 10^{-3}$.

**9.** Polymers according to any one of claims 2 to 8, characterised in that, in the case where an epoxy resin (d) is employed, on the one hand, the quantity of epoxy resin (d) represents 2 % to 20 % of the weight of the mixture of bisimide (a) + acrylate reactant (b), and, on the other hand, the quantity of chlorine or of bromine contributed by the epoxy resin (d), expressed as the weight percentage of elemental chlorine or of elemental bromine relative to the weight of the overall mixture of bisimide (a) + acrylate reactant (b) + epoxy resin (d), represents not more than 6 %.

**10.** Polymers according to any one of claims 1 to 9, characterised in that they are in the form of cured polymers which are insoluble in the usual polar organic solvents and which do not exhibit any significant softening below the temperature at which they begin to degrade.

**11.** Polymers according to any one of claims 1 to 9, characterised in that they are in the form of heat-curable prepolymers (P) which are soluble in the usual polar organic solvents and which have a softening point at a temperature below 200 °C.

12. Process for preparing cured polymers according to claims 1 to 10, characterised in that it consists in heating the mixture of the reactants between 50 ° C and 180 ° C to form prepolymers (P) in a first stage, and then causing the prepolymers (P) to cure by heating at a temperature of between 150 ° C and 300 ° C.

13. Preparation process according to claim 12, characterised in that a process for continuously preparing the prepolymer (P) is employed, consisting in separately introducing into a kneader fitted with an extruder screw:
- on the one hand, the bisimide (a) in the divided solid state, and
- on the other hand, the group of the reactants consisting of the acrylate reactant (b) in the liquid or molten state, the imidazole compound (c) in the solid state or in solution and optionally the epoxy resin (d) in the liquid state, it being possible for the various reactants in this group themselves to be introduced together or separately, for their part.

**Claims for the following Contracting State : ES**

1. Process for the preparation of polymers containing imide groups which are in the form of cured polymers, insoluble in the usual polar organic solvents and exhibiting no appreciable softening below the temperature at which they begin to degrade, characterised in that it consists in reacting, at a temperature ranging from 50 ° C to 300 ° C, the following reactants:
- (a) an N,N'-bismaleimide of formula :

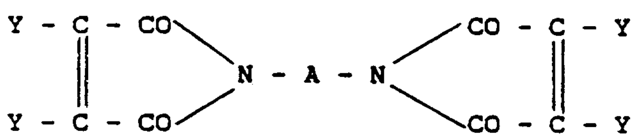

(I)

in which:
each of the symbols Y, which are identical or different, denotes a hydrogen atom, a methyl radical or a chlorine atom;
the symbol A denotes a divalent radical chosen from the group consisting of cyclohexylene, phenylene, 4-methyl-1,3-phenylene, 2-methyl-1,3-phenylene, 5-methyl-1,3-phenylene and 2,5-diethyl-3-methyl-1,4-phenylene radicals, and the radicals of formula:

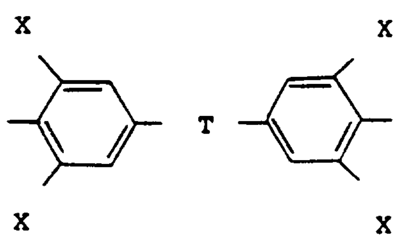

in which T denotes a single valency bond or a group:

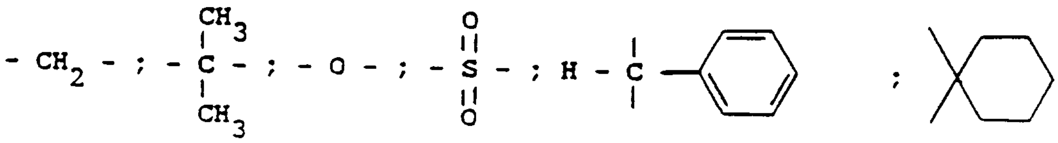

;

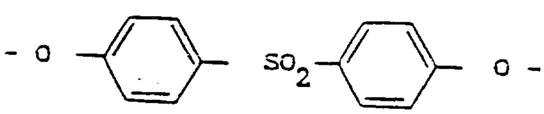

and each of the symbols X, which are identical or different, denotes a hydrogen atom or a methyl, ethyl, propyl or isopropyl radical;

- (b) an acrylate reactant consisting:
either (b1) of a novolak epoxy (meth)acrylate corresponding to the general formula:

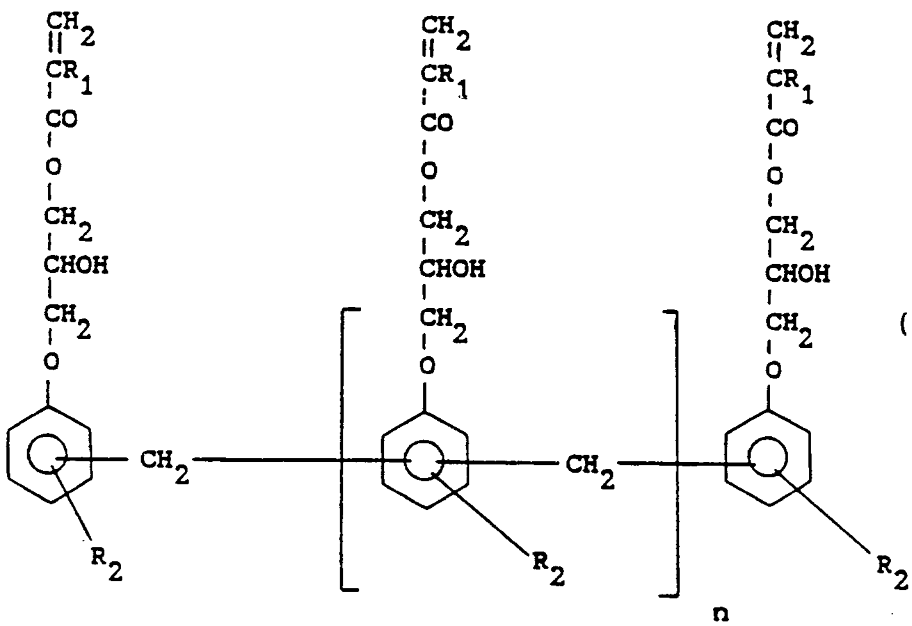

(II)

in which:
each of the symbols $R_1$ and $R_2$, which are identical or different, denotes a hydrogen atom or a methyl radical; and
n is a positive number situated in the range from 0.1 to 8;
or of the mixture of the abovementioned compound (b1) with not more than 30 % by weight, relative to the weight of the mixture (b1) + (b2), of a compound (b2) of general formula

$$(CH_2 = CR_3 - CO - O\overline{)_3}\!\!-\!\!B \qquad (III)$$

in which:
the symbol $R_3$ denotes a hydrogen atom or a methyl radical;
the symbol B denotes a trivalent organic radical derived from a linear or branched saturated aliphatic hydrocarbon containing from 1 to 20 carbon atoms and capable of containing one or more oxygen bridges and one or more hydroxyl groups;

(c) an imidazole compound in catalytic amounts, and

optionally an epoxy resin (d) consisting either of a chlorinated or brominated epoxy resin (d1), or of a mixture of the resin (d1) with an unchlorinated or unbrominated epoxy resin (d2), and in that the amounts of compounds (a) and (b) are chosen so as to obtain a ratio r, representing the following ratio:

$$\frac{\text{number of maleimide groups contributed by the compound (a)}}{\text{number of acrylic double bonds contributed by the acrylate (b)}},$$

of between 1.7/1 and 10/1.

**2.** Process for the preparation of polymers containing imide groups which are in the form of heat-curable prepolymers (P) soluble in polar organic solvents and exhibiting a softening point at a temperature below 200 °C, characterised in that the mixture of the reactants (a), (b), (c) and optionally (d) as defined

above in claim 1 is heated directly to a temperature of between 50 °C and 180 °C until a homogeneous liquid or pasty product is obtained.

**3.** Process according to claim 1, characterised in that it consists in heating the mixture of the reactants between 50 °C and 180 °C to form a prepolymer (P) in a first stage, and in then causing the prepolymer (P) to cure by heating to a temperature of between 150 °C and 300 °C.

**4.** Process according to claim 2 or 3, characterised in that a process for continuous preparation of the prepolymer (P) is employed, consisting in separately introducing into a kneader fitted with an extruder screw:
- on the one hand, the bisimide (a) in the divided solid state, and
- on the other hand, the group of the reactants consisting of the acrylate reactant (b) in the liquid or molten state, the imidazole compound (c) in the solid state or in solution and optionally the epoxy resin (d) in the liquid state, it being possible for the various reactants in this group themselves to be introduced together or separately, for their part.

**5.** Process according to claim 4, characterised in that the acrylate reactant (b), the imidazole compound (c) and optionally the epoxy resin (d) are fed in downstream of the zone in which the imide reactant (a) is fed in.

**6.** Process according to one of claims 1 to 5, characterised in that the bismaleimide (a) of formula (I) is chosen from the group consisting of:
- N,N'-meta-phenylenebismaleimide,
- N,N'-para-phenylenebismaleimide,
- N,N'-4,4'-diphenylmethanebismaleimide,
- N,N'-4,4'-diphenyl ether bismaleimide,
- N,N'-4,4'-diphenylsulphonebismaleimide,
- N,N'-1,4-cyclohexylenebismaleimide,
- N,N'-4,4'-diphenyl-1,1,-cyclohexanebismaleimide,
- N,N'-4,4'-(2,2-diphenylpropane)bismaleimide,
- N,N'-4,4'-triphenylmethanebismaleimide,
- N,N'-2-methyl-1,3-phenylenebismaleimide,
- N,N'-4-methyl-1,3-phenylenebismaleimide, and
- N,N'-5-methyl-1,3-phenylenebismaleimide

**7.** Process according to any one of claims 1 to 6, characterised in that the acrylate reactant (b) is chosen from the group consisting of the novolak epoxy acrylates (b1) of formula (II), in which $R_1$ and $R_2$ denote a hydrogen atom and n is a positive number situated in the range from 0.1 to 5, these compounds being taken by themselves or mixed with not more than 25 % by weight, relative to the weight of the mixture (b1) + (b2), of a compound (b2) consisting of trimethylolpropane triacrylate.

**8.** Process according to any one of claims 1 to 7, characterised in that the imidazole compound (c) corresponds to the general formula:

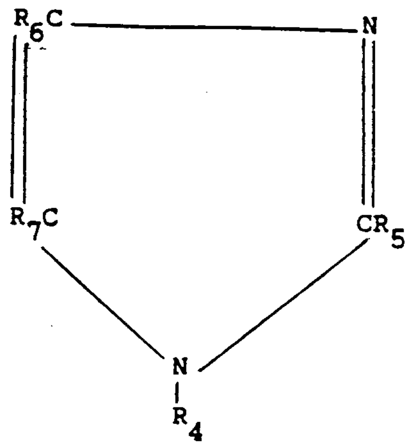

(IV)

in which each of $R_4$, $R_5$, $R_6$ and $R_7$, which are identical or different, denotes: a hydrogen atom, an alkyl or alkoxy radical containing from 1 to 20 carbon atoms, or a vinyl, phenyl or nitro radical, it being possible for $R_6$ to form with $R_7$ and the carbon atoms to which these radicals are linked a single ring such as, for example, a benzene ring.

**9.** Process according to claim 8, characterised in that the imidazole compound (c) is chosen from the group consisting of imidazole or glyoxaline, 1-methylimidazole, 2-methylimidazole, 1,2-dimethylimidazole, 1-vinylimidazole, 1-vinyl-2-methylimidazole and benzimidazole.

**10.** Process according to any one of claims 1 to 9, characterised in that, in the case where an epoxy resin (d) is employed, the following are used:

- as epoxy resin (d1): an epoxy resin which has an epoxy equivalent weight of between 100 and 500 and which consists of a glycidyl ether obtained by reacting epichlorohydrin with a derivative which is chlorinated or brominated on the aromatic ring(s) and which originates from a polyphenol chosen from the group consisting of: the class of bis(hydroxyphenyl)alkanes such as 2,2-bis(4-hydroxyphenyl)propane, bis(4-hydroxyphenyl)methane, bis(4-hydroxyphenyl)-methylphenylmethane and bis(4-hydroxyphenyl)tolylmethanes, resorcinol, hydroquinone, pyrocatechol, 4,4'-dihydroxydiphenyl, and the products of condensation of the abovementioned phenols with an aldehyde;
- optionally, as epoxy resin (d2): an epoxy resin which has an epoxy equivalent weight which is also between 100 and 500 and which consists of a glycidyl ether obtained by reacting epichlorohydrin with an unchlorinated or unbrominated polyphenol chosen from the group of the abovementioned phenols.

**11.** Process according to any one of claims 1 to 10, characterised in that the content of imidazole compound (c), expressed as the number of moles of compound (c) per 100 g of bisimide (a), is situated in the range from $0.15x10^{-3}$ to $6x10^{-3}$.

**12.** Process according to any one of claims 1 to 11, characterised in that, in the case where an epoxy resin (d) is employed, on the one hand, the quantity of epoxy resin (d) represents 2 % to 20 % of the weight of the mixture of bisimide (a) + acrylate reactant (b), and, on the other hand, the quantity of chlorine or of bromine contributed by the epoxy resin (d), expressed as the weight percentage of elemental chlorine or of elemental bromine relative to the weight of the overall mixture of bisimide (a) + acrylate reactant (b) + epoxy resin (d), represents not more than 6 %.

**Patentansprüche**

**Patentansprüche für folgende Vertragsstaaten : AT, BE, CH, DE, FR, GB, IT, LI, LU, NL, SE**

**1.** Polymere mit Imidgruppen, dadurch gekennzeichnet, daß sie enthalten das Produkt der Reaktion bei einer Temperatur von 50 °C bis 300 °C zwischen:

(a) einem N,N'-Bis-maleimid der Formel

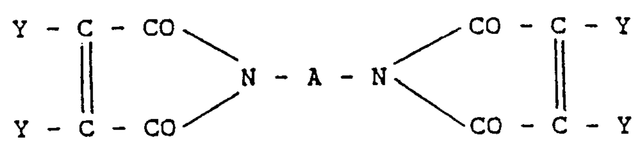

(I)

worin:

- die Symbole Y, die identisch oder verschieden sind, je-weils ein Wasserstoffatom, einen Methylrest oder ein Chloratom bedeuten;
- das Symbol A einen zweiwertigen Rest darstellt, ausgewählt aus der Gruppe bestehend aus den Resten: Cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen, und den Resten der Formel

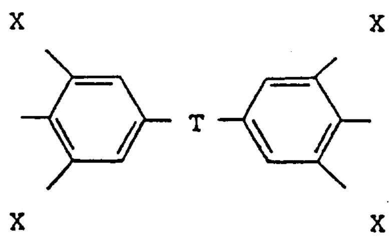

worin T eine einfache Valenzbindung darstellt oder eine Gruppe:

$-CH_2-$ ; 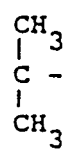 ; $-O-$ ; 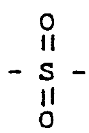 ; 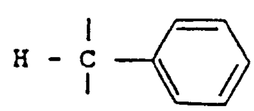 ; 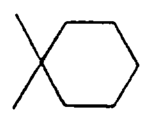 ;

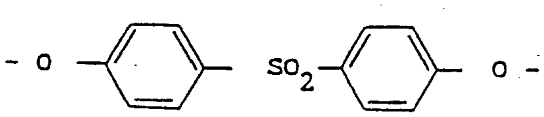

und die Symbole X, die identisch oder verschieden sind, jeweils ein Wasserstoffatom, einen Methyl-, Ethyl-, Propyl- oder Isopropylrest bedeuten;

(b) einem Acrylatreagens bestehend

* entweder (b1) aus einem Novolakepoxy-(meth)acrylat der allgemeinen Formel

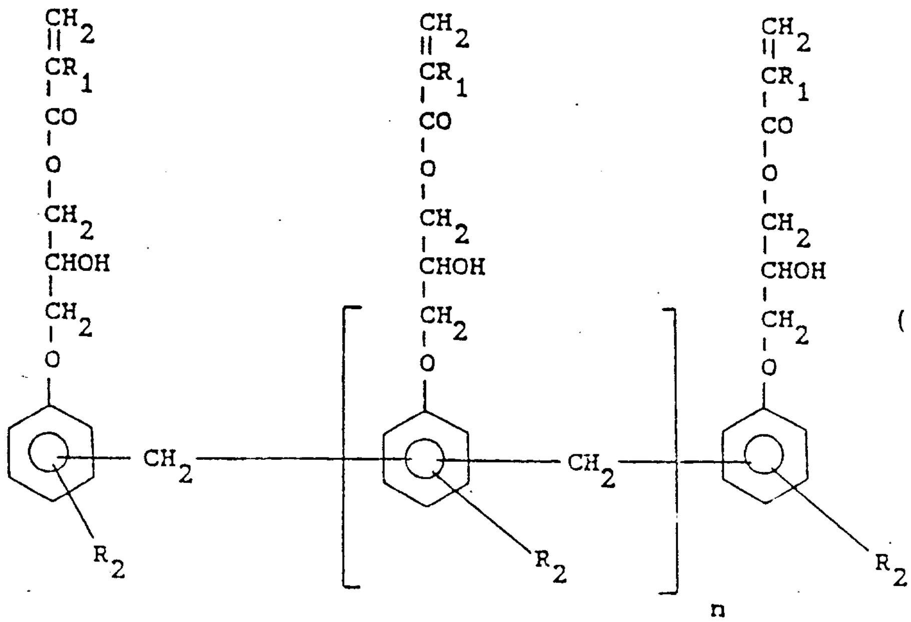

(II)

worin:

- die Symbole $R_1$ und $R_2$, die identisch oder verschieden sind, jeweils ein Wasserstoffatom oder einen Methylrest darstellen;
- n eine positive Zahl in dem Bereich von 0,1 bis 8 ist;

* oder aus dem Gemisch der vorher erwähnten Verbindung (b1) mit höchstens 30 Gew.-% in bezug auf das Gewicht des Gemisches (b1) + (b2), einer Verbindung (b2) der allgemeinen Formel

$$(CH_2 = CR_3 - CO - O)_3 B \qquad \text{(III)}$$

worin:

- das Symbol $R_3$ ein Wasserstoffatom oder einen Methylrest bedeutet,
- das Symbol B einen dreiwertigen organischen Rest darstellt, abgeleitet von einem linearen oder verzweigten gesättigten aliphatischen Kohlenwasserstoff mit 1 bis 20 Kohlenstoffatomen, der eine oder mehrere Sauerstoffbrücken und eine oder mehrere Hydroxylfunktionen enthalten kann,

(c) einer Imidazolverbindung in katalytischer Menge,

- wobei die Mengender Verbindungen (a) und (b) so gewählt sind, daß ein Verhältnis r erhalten wird, das das folgende Verhältnis darstellt:

$$\frac{\text{Anzahl der Maleimidgruppen eingebracht durch die Verbindung (a)}}{\text{Anzahl der Acryldoppelbindungen, eingebracht durch das Acrylat (b)}}$$

inbegriffen zwischen 1,7/1 und 10/1.

**2.** Polymere gemäß Anspruch 1, dadurch gekennzeichnet, daß das Reaktionsmilieu, welches Zu ihrer Herstellung dient, außerdem ein Epoxyharz (d) enthält, bestehend entweder aus einem chlorierten oder

bromierten Epoxyharz (d1) oder aus dem Gemisch des Harzes (d1) mit einem nicht-chlorierten oder nicht-bromierten Epoxyharz (d2).

**3.** Polymere gemäß einem der Ansprüche 1 oder 2, dadurch gekennzeichnet, daß das Bismaleimid (a) der Formel (I) ausgewählt ist aus der Gruppe gebildet von:
- N,N'-Metaphenylen-bis-maleimid
- N,N'-Paraphenylen-bis-maleimid
- N,N'-4,4'-Diphenylmethan-bis-maleimid
- N,N'-4,4'-Diphenylether-bis-maleimid
- N,N'-4,4'-Diphenylsulfon-bis-maleimid
- N,N'-1,4-Cyclohexylen-bis-maleimid
- N,N'-4,4'-1,1-Diphenyl-cyclophexan-bis-maleimid
- N,N'-4,4'-2,2-Diphenyl-propan-bis-maleimid
- N,N'-4,4'-Triphenylmethan-bis-maleimid
- N,N'-2-Methyl-1,3-phenylen-bis-maleimid
- N,N'-4-Methyl-1,3-phenylen-bis-maleimid
- N,N'-5-Methyl-1,3-phenylen-bis-maleimid

**4.** Polymere gemäß einem der Ansprüche 1 bis 3, dadurch gekennzeichnet, daß das Acrylatreagens (b) ausgewählt ist aus der Gruppe gebildet von den Novolakepoxy-acrylaten (b1) der Formel (II), worin $R_1$ und $R_2$ ein Wasserstoffatom bedeuten und n eine positive Zahl in dem Bereich von 0,1 bis 5 ist, wobei diese Verbindungen allein genommen oder im Gemisch mit höchstens 25 Gew.-% in bezug auf das Gewicht des Gemisches (b1) + (b2) einer Verbindung (b2) bestehend aus Trimethylolpropantriacrylat, sind.

**5.** Polymere gemäß einem der Ansprüche 1 bis 4, dadurch gekennzeichnet, daß die Imidazolverbindung (c) der allgemeinen Formel

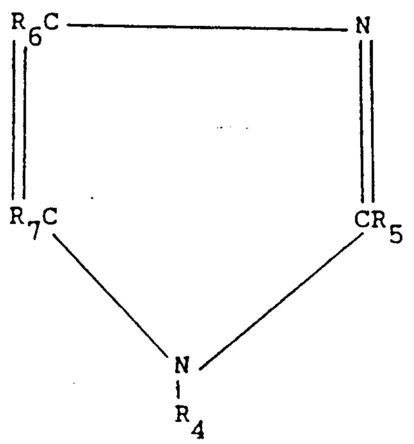

(IV)

entspricht, worin $R_4$, $R_5$, $R_6$ und $R_7$, die identisch oder verschieden sind, jeweils bedeuten: ein Wasserstoffatom, einen Alkyl- oder Alkoxyrest mit 1 bis 20 Kohlenstoffatomen, Vinyl, Phenyl, Nitro, wobei $R_6$ mit $R_7$ und den Kohlenstoffatomen, an die diese Reste gebunden sind, einen einzigen Ring bilden können wie beispielsweise einen Benzolring.

**6.** Polymere gemäß Anspruch 5, dadurch gekennzeichnet, daß die Imidazolverbindung (c) ausgewählt ist aus der Gruppe gebildet von Imidazol oder Glyoxalin, 1-Methylimidazol, 2-Methylimidazol, 1,2-Dimethylimidazol, 1-Vinylimidazol, 1-Vinyl-2-methylimidazol und Benzimidazol.

**7.** Polymere gemäß einem der Ansprüche 2 bis 6, dadurch gekennzeichnet, daß man im Falle der Verwendung eines Epoxyharzes (d) verwendet:
- als Epoxyharz (d1): ein Epoxyharz, das ein Epoxyäquivalentgewicht zwischen 100 und 500 besitzt und das aus einem Glycidsther besteht, der erhalten ist, indem mit Epichlorhydrin ein an

dem/den aromatischem/n Ring/en chloriertes oder bromiertes Derivat aus einem Polyphenol zur Reaktion gebracht wird, ausgewählt aus der Gruppe gebildet durch: die Familie der Bis-(hydroxyphenyl)-alkane wie 2,2-Bis-(4-hydroxyphenyl)-propan, Bis-(4-hydroxyphenyl)-methan, Bis-(4-hydroxyphenyl)-methylphenylmethan, Bis-(4-hydroxyphenyl)-tolyl-methane, Resorcin, Hydrochinon, Brenzkatechin, 4,4'-Dihydroxydiphenyl und die Kondensationsprodukte der vorerwähnten Phenole mit einem Aldehyd;

- gegebenenfalls als Epoxyharz (d2): ein Epoxyharz, das ein Epoxyäquivalentgewicht ebenfalls zwischen 100 und 500 besitzt und das aus einem Glycidether besteht, der erhalten ist, indem mit Epichlorhydrin ein nicht-chloriertes oder nicht-bromiertes Polyphenol ausgewählt aus der Gruppe der vorerwähnten Phenole zur Reaktion gebracht wird.

**8.** Polymere gemäß einem der Ansprüche 1 bis 7, dadurch gekennzeichnet, daß der Anteil der Imidazolverbindung (c) ausgedrückt in Anzahl der Mole der Verbindung (c) pro 100 g des Bisimids (a) in dem Bereich von $0{,}15 \times 10^{-3}$ bis $6 \times 10^{-3}$ liegt.

**9.** Polymere gemäß einem der Ansprüche 2 bis 8, dadurch gekennzeichnet, daß im Falle der Verwendung eines Epoxyharzes (d) einerseits die Menge an Epoxyharz (d) 2 Gew.-% bis 20 Gew.-% des Gemisches Bisimid (a) + Acrylatreagens (b) darstellt und andererseits die Chlor- oder Brommenge, die durch das Epoxyharz (d) eingebracht wird, ausgedrückt durch den Gewichtsprozentsatz an elementarem Chlor oder elementarem Brom in bezug auf das Gewicht des Gesamtgemisches Bisimid (a) + Acrylatreagens (b) + Epoxyharz (d) höchstens 6 % darstellt.

**10.** Polymere gemaß einem der Ansprüche 1 bis 9, dadurch gekennzeichnet, daß sie sich in Form von gehärteten Polymeren, die in den üblichen polaren organischen Lösungsmitteln unlöslich sind, befinden und keine merkliche Erweichung unterhalb der Temperatur, bei der sie sich abzubauen beginnen, aufweisen.

**11.** Polymere gemäß einem der Ansprüche 1 bis 9, dadurch gekennzeichnet, daß sie sich in Form von wärmehärtbaren Prepolymeren (P) befinden, die in den üblichen polaren organischen Lösungsmitteln löslich sind und einen Erweichungspunkt bei einer Temperatur unterhalb 200 °C aufweisen.

**12.** Verfahren zur Herstellung der gehärteten Polymeren gemäß den Ansprüchen 1 bis 10, dadurch gekennzeichnet, daß ein Gemisch der Reaktanten zwischen 50 °C und 180 °C erhitzt wird, um zunächst ein Prepolymeres (P) zu bilden und dann das Härten der Prepolymeren (P) durch Erhitzen auf eine Temperatur zwischen 150 °C und 300 °C bewirkt wird.

**13.** Herstellungsverfahren gemäß Anspruch 12, dadurch gekennzeichnet, daß man ein kontinuierliches Herstellungsverfahren des Prepolymeren (P) verwendet, das darin besteht, in einen Schneckenknet-Extruder einzuführen:

- einerseits das Bisimid (a) in zerteiltem festen Zustand, und
- andererseits die Gruppe der Reaktanten bestehend aus dem Acrylat-Reaktionsteilnehmer (b) in flüssigem oder geschmolzenem Zustand, der Imidazolverbindung (c) in festem Zustand oder in Lösung, und gegebenenfalls dem Epoxyharz (d) in flüssigem Zustand, wobei die verschiedenen Reaktanten dieser Gruppe selbst ihrerseits zusammen oder getrennt eingeführt werden können.

**Patentansprüche für folgenden Vertragsstaat : ES**

**1.** Verfahren zur Herstellung von Polymeren mit Imidgruppen, die sich in Form von gehärteten in den üblichen polaren organischen Lösungsmitteln unlöslichen Polymeren befinden und keine merkliche Erweichung unterhalb der Temperatur, bei der sie sich zu zersetzen beginnen, zeigen, dadurch gekennzeichnet, daß es darin besteht, bei einer Temperatur zwischen 50 °C und 300 °C die folgenden Reagentien zur Reaktion zu bringen:

(a) ein N,N'-Bis-maleimid der Formel

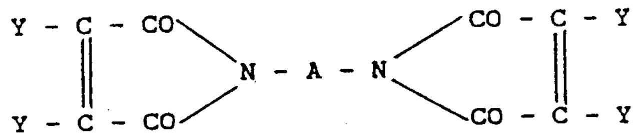

(I)

worin:

- die Symbole Y, die identisch oder verschieden sind, jeweils ein Wasserstoffatom, einen Methylrest oder ein Chloratom bedeuten;
- das Symbol A einen zweiwertigen Rest darstellt, ausgewählt aus der Gruppe bestehend aus den Resten: Cyclohexylen, Phenylen, 4-Methyl-1,3-phenylen, 2-Methyl-1,3-phenylen, 5-Methyl-1,3-phenylen, 2,5-Diethyl-3-methyl-1,4-phennylen, und den Resten der Formel

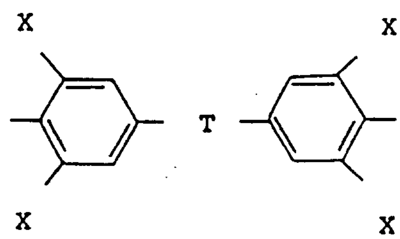

worin T eine einfache Valenzbindung darstellt oder eine Gruppe:

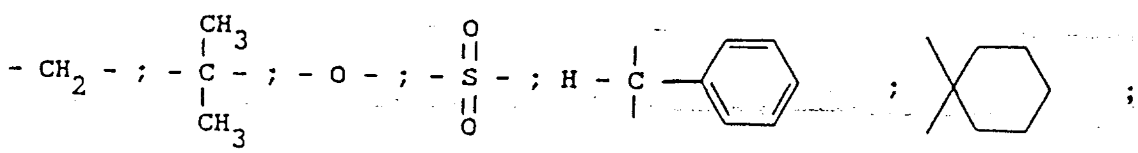

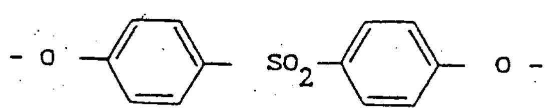

und die Symbole X, die identisch oder verschieden sind, jeweils ein Wasserstoffatom, einen Methyl-, Ethyl-, Propyloder Isopropylrest bedeuten;

(b) ein Acrylatreagens bestehend

* entweder (b1) aus einem Novolakepoxy-(meth)acrylat der allgemeinen Formel

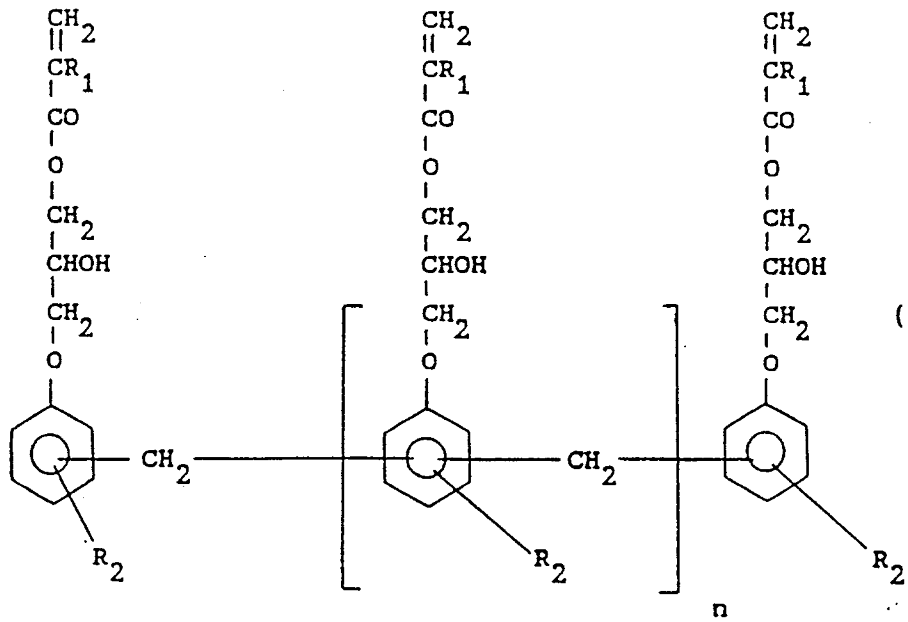

(II)

worin:

- die Symbole $R_1$ und $R_2$, die identisch oder verschieden sind, jeweils ein Wasserstoffatom oder einen Methylrest darstellen;
- n eine positive Zahl in dem Bereich von 0,1 bis 8 ist;

* oder aus dem Gemisch der vorher erwähnten Verbindung (b1) mit höchstens 30 Gew.-% in bezug auf das Gewicht des Gemisches (b1) + (b2), einer Verbindung (b2) der allgemeinen Formel

$$(CH_2 = CR_3 - CO - O)_3\text{—}B \qquad \text{(III)}$$

worin:

- das Symbol $R_3$ ein Wasserstoffatom oder einen Methylrest bedeutet,
- das Symbol B einen dreiwertigen organischen Rest darstellt, abgeleitet von einem linearen oder verzweigten gesättigten aliphatischen Kohlenwasserstoff mit 1 bis 20 Kohlenstoffatomen, der eine oder mehrere Sauerstoffbrücken und eine oder mehrere Hydroxylfunktionen enthalten kann,

(c) eine Imidazolverbindung in katalytischen Mengen,
gegebenenfalls ein Epoxyharz (d), bestehend entweder aus einem chlorierten oder bromierten Epoxyharz (d1) oder aus dem Gemisch des Harzes (d1) mit einem nicht-chlorierten oder nicht-bromierten Epoxyharz (d2); und
daß die Mengender Verbindungen (a) und (b) derart gewählt sind, daß ein Verhältnis r erhalten wird, das das folgende Verhältnis darstellt:

$$\frac{\text{Anzahl der Maleimidgruppen, eingebracht durch die Verbindung (a)}}{\text{Anzahl der Acryldoppelbindungen, eingebracht durch das Acrylat (b)}}$$

zwischen 1,7/1 und 10/1.

2. Verfahren zur Herstellung der Polymere mit Imidgruppen, die sich in Form wärmehärtbarer Prepolymerer (P) befinden, die in polaren organischen Lösungsmitteln löslich sind und einen Erweichungspunkt bei einer Temperatur unterhalb 200 °C aufweisen, dadurch gekennzeichnet, daß man das Gemisch der Reagentien (a), (b) und (c) und gegebenenfalls (d) wie vorstehend in Anspruch 1 definiert, auf eine Temperatur zwischen 50 °C und 180 °C direkt erhitzt, bis zur Erzielung eines flüssigen oder pastösen homogenen Produktes.

3. Verfahren gemäß Anspruch 1, dadurch gekennzeichnet, daß es darin besteht, das Gemisch der Reagentien zwischen 50 °C und 80 °C zu erhitzen, um zunächst ein Prepolymeres (P) zu bilden, und dann das Härten des Prepolymeren (P) durch Erhitzen auf eine Temperatur zwischen 150 °C und 300 °C zu bewirken.

4. Verfahren gemäß Anspruch 2 oder 3, dadurch gekennzeichnet, daß man ein kontinuierliches Herstellungsverfahren des Prepolymeren (P) anwendet, welches darin besteht, einzeln in einen Schneckenknet-Extruder einzuführen:
   - einerseits das Bisimid (a) in zerteiltem festen Zustand, und
   - andererseits die Gruppe der Reaktanten bestehend aus dem Acrylat-Reaktionsteilnehmer (b) in flüssigem oder geschmolzenem Zustand, der Imidazolverbindung (c) in festem Zustand oder in Lösung, und gegebenenfalls dem Epoxyharz (d) in flüssigem Zustand, wobei die verschiedenen Reaktanten dieser Gruppe selbst ihrerseits zusammen oder getrennt eingeführt werden können.

5. Verfahren gemäß Anspruch 4, dadurch gekennzeichnet, daß das Acrylatreagens (b), die Imidazolverbindung (c) und gegebenenfalls das Epoxyharz (d) unterhalb der Zuführungszone des Imidreagens (a) eingeführt werden.

6. Verfahren gemäß einem der Ansprüche 1 bis 5, dadurch gekennzeichnet, daß das Bismaleimid (a) der Formel (I) ausgewählt ist aus der Gruppe bestehend aus:
   - N,N'-Metaphenylen-bis-maleimid
   - N,N'-Paraphenylen-bis-maleimid
   - N,N'-4,4'-Diphenylmethan-bis-maleimid
   - N,N'-4,4'-Diphenylether-bis-maleimid
   - N,N'-4,4'-Diphenylsulfon-bis-maleimid
   - N,N'-1,4-Cyclohexylen-bis-maleimid
   - N,N'-4,4'-1,1-Diphenyl-cyclohexan-bis-maleimid
   - N,N'-4,4'-2,2-Diphenyl-propan-bis-maleimid
   - N,N'-4,4'-Triphenylmethan-bis-maleimid
   - N,N'-2-Methyl-1,3-phenylen-bis-maleimid
   - N,N'-4-Methyl-1,3-phenylen-bis-maleimid
   - N,N'-5-Methyl-1,3-phenylen-bis-maleimid

7. Verfahren gemäß einem der Ansprüche 1 bis 6, dadurch gekennzeichnet, daß das Acrylatreagens (b) ausgewählt ist aus der Gruppe bestehend aus den Novolakepoxy-acrylaten (b1) der Formel (II), worin $R_1$ und $R_2$ ein Wasserstoffatom darstellt und n eine positive Zahl in dem Bereich von 0,1 bis 5 ist, wobei diese Verbindungen allein genommen werden oder im Gemisch mit höchstens 25 Gew.-% in bezug auf das Gewicht des Gemisches (b1) + (b2) einer Verbindung (b2), die aus Trimethylol propantriacrylat besteht.

8. Verfahren gemäß einem der Ansprüche 1 bis 7, dadurch gekennzeichnet, daß die Imidazolverbindung (c) der allgemeinen Formel

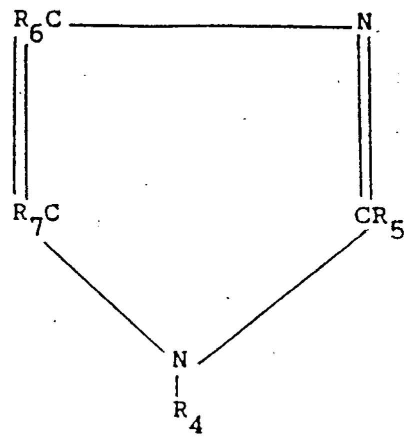

(IV)

entspricht, worin $R_4$, $R_5$, $R_6$ und $R_7$, die identisch oder verschieden sind, jeweils bedeuten: ein Wasserstoffatom, einen Alkyl- oder Alkoxyrest mit 1 bis 20 Kohlenstoffatomen, Vinyl, Phenyl, Nitro, wobei $R_6$ mit $R_7$ und den Kohlenstoffatomen, an die diese Reste gebunden sind, einen einzigen Ring bilden können wie beispielsweise einen Benzolring.

**9.** Verfahren gemäß Anspruch 8, dadurch gekennzeichnet, daß die Imidazolverbindung (c) ausgewählt ist aus der Gruppe gebildet von Imidazol oder Glyoxalin, 1-Methylimidazol, 2-Methylimidazol, 1,2-Dimethylimidazol, 1-Vinylimidazol, 1-Vinyl-2-methylimidazol und Benzimidazol.

**10.** Verfahren gemäß einem der Ansprüche 1 bis 9, dadurch gekennzeichnet, daß man im Falle der Verwendung eines Epoxyharzes (d) verwendet:
- als Epoxyharz (d1): ein Epoxyharz, das ein Epoxyäquivalentgewicht zwischen 100 und 500 besitzt und das aus einem Glycidether besteht, der erhalten ist, indem mit Epichlorhydrin ein an dem/den aromatischem/n Ring/en chloriertes oder bromiertes Derivat aus einem Polyphenol zur Reaktion gebracht wird, ausgewählt aus der Gruppe gebildet durch: die Familie der Bis-(hydroxyphenyl)-alkane wie 2,2-Bis-(4-hydroxyphenyl)-propan, Bis-(4-hydroxyphenyl)-methan, Bis-(4-hydroxyphenyl)-methylphenyl-methan, Bis-(4-hydroxyphenyl)-tolyl-methane, Resorcin, Hydrochinon, Brenzkatechin, 4,4'-Dihydroxydiphenyl und die Kondensationsprodukte der vorerwähnten Phenole mit einem Aldehyd;
- gegebenenfalls als Epoxyharz (d2): ein Epoxyharz, das ein Epoxyäquivalentgewicht ebenfalls zwischen 100 und 500 besitzt und das aus einem Glycidether besteht, der erhalten wurde, indem mit Epichlorhydrin ein nichtchloriertes oder nicht-bromiertes Polyphenol ausgewählt aus der Gruppe der vorerwähnten Phenole zur Reaktion gebracht wurde.

**11.** Verfahren gemäß einem der Ansprüche 1 bis 10, dadurch gekennzeichnet, daß der Anteil der Imidazolverbindung (c) ausgedrückt in Anzahl der Mole der Verbindung (c) pro 100 g des Bisimids (a) in dem Bereich von $0{,}15 \times 10^{-3}$ bis $6 \times 10^{-3}$ liegt.

**12.** Verfahren gemäß einem der Ansprüche 1 bis 11, dadurch gekennzeichnet, daß im Falle der Verwendung eines Epoxyharzes (d) einerseits die Menge an Epoxyharz (d) 2 % bis 20 % des Gewichts des Gemisches Bisimid (a) + Acrylatreagens (b) beträgt, und andererseits die Chlor- oder Brommenge, die durch das Epoxyharz (d) eingebracht wird, ausgedrückt durch den Gewichtsprozentsatz an elementarem Chlor oder elementarem Brom in bezug auf das Gewicht des Gesamtgemisches Bisimid (a) + Acrylatreagens (b) + Epoxyharz (d) höchstens 6 % darstellt.